# EUROPEAN PATENT SPECIFICATION

(11) **EP 0 576 122 B1**
(45) Date of publication and mention of the grant of the patent: **29.08.2001**
(21) Application number: 93303173.4
(22) Date of filing: 26.04.1993
(51) Int. Cl.: H04L 12/56

(54) **Packet network and method for congestion avoidance in packet networks**
Paketnetzwerk und Verfahren zur Vermeidung von Überlastung eines solchen Netzwerks
Réseau de paquets et méthode pour éviter la congestion dans un tel réseau

(30) Priority: 27.04.1992 JP 10786992; 12.08.1992 JP 21531092; 26.11.1992 JP 31725692
(43) Date of publication of application: 29.12.1993
(73) Proprietor: NIPPON TELEGRAPH AND TELEPHONE CORPORATION, Shinjuku-ku, Tokyo 163-19 (JP)
(72) Inventor: Tokura, Nobuyuki, Yokosuka-shi, Kanagawa 239 (JP); Kajiyama, Yoshio, Yokohama-shi Kanagawa 235 (JP); Tatsuno, Hideo, Yokosuka-shi, Kanagawa 239 (JP)
(74) Representative: Skone James, Robert Edmund

(56) References cited:
- EP-A- 0 403 995
- IEEE TRANSACTIONS ON NEURAL NETWORKS, vol.1, no.1, March 1990, NEW YORK US pages 122 - 130 A. HIRAMATSU 'ATM Communications Network Control by Neural Networks'
- THE INTERNATIONAL TELEGRAPH AND TELEPHONE CONSULTATIVE COMMITTEE CCITT 'INTEGRATED SERVICES DIGITAL NETWORK : B-ISDN GENERAL NETWORK ASPECTS, Recommendation I.311' 1991 , INTERNATIONAL TELECOMMUNICATION UNION , GENEVA, CH * paragraph 4.1.2.1 * * paragraph 4.1.2.2 * * paragraph 4.1.5.1 * * paragraph 4.1.5.2 *
- 10TH CONFERENCE ON DISTRIBUTED COMPUTING, June 1990, NEW YORK, US pages 390 - 397 D.E. COMER ET AL. 'A Rate-Based Congestion Avoidance and Control Scheme for Packet Switched Networks'
- IEEE COMMUNICATIONS MAGAZINE, vol.29, no.10, October 1991, PISCATAWAY, NJ US pages 66 - 73 A.A. LAZAR ET AL. 'Control of Resources in Broadband Networks with Quality of Service Guarantees'
- IEEE COMMUNICATIONS MAGAZINE, vol.29, no.10, October 1991, NEW YORK, US pages 36 - 45 H. GILBERT ET AL. 'Developping a Cohesive Traffic Management System for ATM Networks'
- VISUAL COMMUNICATIONS AND IMAGE PROCESSING, vol.2, November 1991, USA pages 592 - 603 M.GILGE ET AL. 'Motion Video Coding for Packet-Switched Networks - An Integrated Approach'

## Description

### Technical Field

This invention relates to packet networks with variable bit rate attributes. Specifically, it relates to packet networks that can transfer variable length packets Including Frame relay service or ATM (Asynchronous Transfer Mode) and other fixed length packets (cells) at variable bit rates, and to a method for avoiding congestion in packet networks, and also to the node configurations required for these purposes.

### Prior Art

Hitherto, the transmission bit rate in a transmission line, for example, the transmission bit rate expressed in terms of bit/sec, has taken the form of a constant base rate. In addition, switching facilities have similarly operated at a constant base rate.

In packet networks or ATM networks where variable length packets or ATM-type fixed length packets (cells) are transferred through the network from source nodes to destination nodes via intermediate nodes on the basis of the destination addresses or path or channel identifiers of these packets, the network is constituted in such manner that transmission is possible at user-convenient timings. These packet networks or ATM networks are constituted so that the average bit rate can vary by agreement to suit users' convenience.

The following sorts of methods are adopted as countermeasures against traffic congestion in such networks.

Firstly, in a system where data transfer within the network is carried out on the basis of call admission control, whenever traffic congestion occurs, transmission from any terminal node where there is a new transmission request becomes impossible. In this case, another transmission request is made after a time, and if the congestion has cleared, the request is accepted and transmission becomes possible. In this particular case, even if congestion has occurred, transmission is still possible from terminals which had been transmitting prior to the occurrence of the congestion, and so call acceptance control is not straightforward.

Next, in a packet network, although packets can be forwarded from all terminal nodes even if there is congestion, packets which have overflowed due to the congestion are discarded. Source nodes are notified that packets have been discarded, with the result that re-transmission takes place, so that actual transmission is impossible.

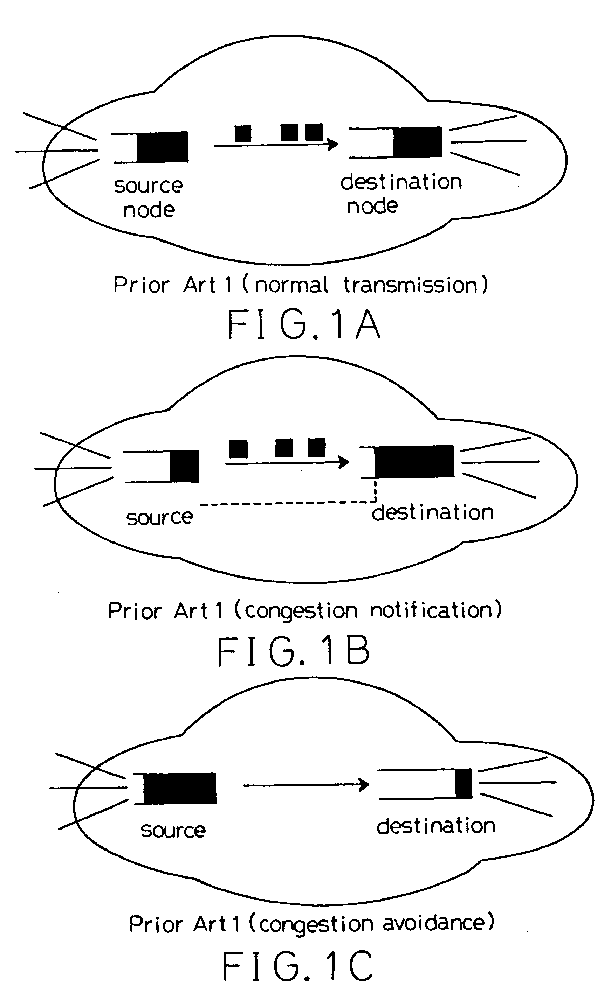

For this reason, the following method is employed in packet networks to cope with congestion: namely, when traffic congestion is detected, transmission restrictions are applied to the source nodes and their transmission thereby suspended. The principles of congestion avoidance by this method are illustrated in **Figure 1** A to 1C. which shows transmission of packets from a source node being suspended by means of a congestion notification from a destination (or intermediate) node.

A problem encountered with this method, however, is that packets will be discarded when buffer capacity in terminal nodes is small. Another problem is that transmission downtime lengthens when the buffers provided are small in capacity. In addition, large-capacity buffers are needed to achieve efficient network operation, and this will result in overall network efficiency deteriorating and overall system costs being pushed up. One way of ensuring that congestion does not occur would be to construct a network with plentiful surplus capacity. However, constructing a network with plentiful surplus capacity amounts to providing equipment that will not normally be used ― for example, buffers of sufficient size at intermediate and terminal nodes ― with the result that efficiency deteriorates.

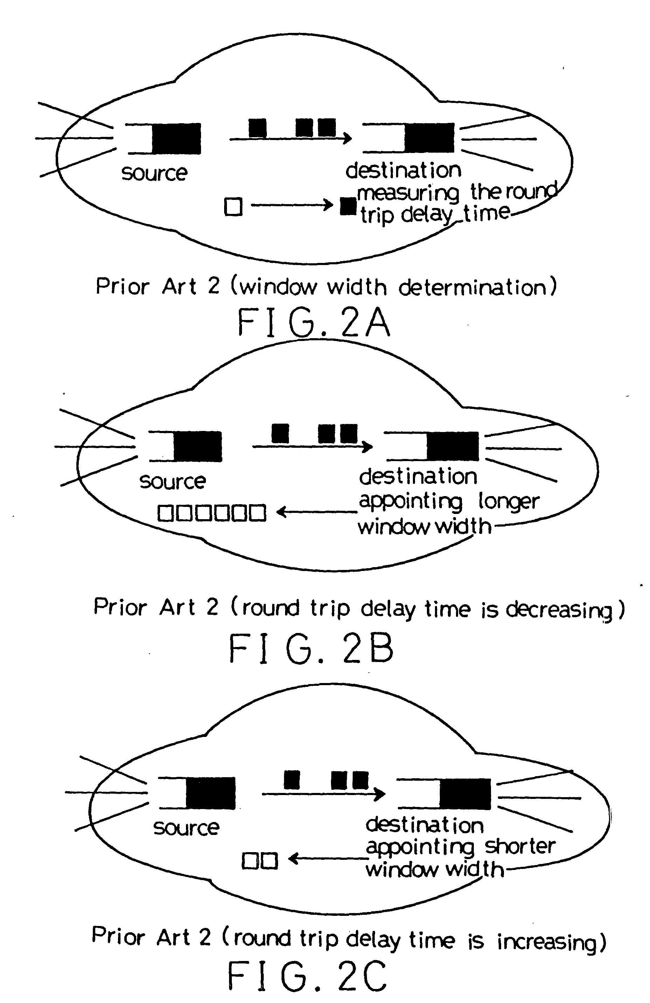

Next, a method for controlling congestion in packet networks is to control packet transfer by monitoring packet flow (by sampling short periods during packet transfer) and on this basis deciding whether or not congestion is occurring (this is called *window flow control*). This technique is described in Japanese Unexamined Patent Disclosure No.3-174848 (US Patent 400858). The principles of congestion avoidance by this method are shown in Figures 2A to 2C. According to this method, round-trip delay time is measured at source nodes, and when this round-trip delay time is decreasing, it is estimated that the network is not in an overload condition, whereupon the traffic allowed from the source side is increased. On the other hand, if the round-trip delay time is increasing, it is estimated that the network is in an overload condition, whereupon the traffic allowed from the source side is decreased, thereby halting the sending of packets.

However, a problem encountered with this window flow control is that packets will be discarded when the buffers provided at the nodes are of small capacity. Moreover, the prediction of network condition on the basis of delay times does not always agree with the actual condition of the network.

The problematic point previously encountered in connection with congestion detection may now be stated. Namely, because it involves judging the condition of transmission lines at the present point of time, conventional detection of congestion amounts to detecting congestion after a state of congestion has already arisen, and has not been of a sort that prevents congestion by predicting congestion of packet transmission at a future point in time on the basis of packet transfer rate at the present point of time.

In addition, when packets from a large number of signal sources are multiplexed, because conventional detection of packet transfer rate for purposes of congestion detection has predicted packet transfer on the basis of a probability distribution model for traffic sources, it has been unable to cope with a case where signal source parameters change with time. Accordingly, because it has not predicted packet transfer rate at a prescribed time in the future, it has not detected that congestion will occur.

The IEEE Transactions on Neural Networks, vol 1, March 1990, No. 1, New York, US pages 122-130 "ATM Communications Network Control by Neural Networks" describes a learning method which uses neural networks for service quality control in ATM networks. The network controller uses back propagation neural networks for learning the relations between offered traffic and service quality. This then allows the neural network to learn precise relations using a so called "leaky pattern table method" to improve control of transfer of data over the ATM network.

10th Conference on Distributed Computing, June 1990, New York, US pages 390-397 "A Rate Based Congestion Avoidance and Control Scheme For Packet Switched Networks describes congestion controlling inside a network by discarding excess traffic before it enters the network. This is achieved using a control scheme which monitors the incoming traffic to each destination and provides rate based feed back information to the sources of bursty traffic so that sources of traffic can adjust their packet rates to match the network capacity.

An object of the present invention is to provide, for congestion avoidance in packet networks, a packet network wherein packet discard does not occur, this being achieved by controlling packet transfer in the network on the basis of the concepts of acceleration or acceleration ratio, which are introduced as values that indicate the degree of increase in packet transfer rate.

A further object of the present invention is to provide a packet network wherein high throughput can be attained even with small-capacity buffers.

According to a first aspect of the present invention, we provide a packet network comprising source nodes, and network nodes wherein packets are transferred to each network node from a number of respective source nodes via a respective transmission line, the transfer being carried out at a transfer rate in accordance with an established upper limit, wherein each network node is adapted to predict a packet transfer rate on the basis of the total packet rate on the transmission line, and a round trip delay time t between the network node and a respective source node, and wherein
if congestion is predicted by a network node, the network node is adapted to send a congestion prediction signal to each respective source node, and wherein
each source node is adapted to decrease its current packet transfer rate when the congestion prediction signal is received characterised in that the degrees of increase of the transfer rate have an upper limit set by an acceleration (α) or an acceleration ratio (exp(*β*)) which respectively indicate the rate of change with time or the ratio of change with time of the packet transfer rate, and in that each network node is adapted to predict a packet transfer rate on the basis of the acceleration (α) or the acceleration ratio (exp(β)).

In addition, a lower limit or an initial bit rate can be established for the packet transfer rate at source nodes in this packet network.

Intermediate nodes or destination nodes of the packet network can be provided with means for predicting packet transfer rate *t* seconds later on the basis of (a) the packet transfer rate of transit packets or the packet transfer rate of incoming packets, and (b) the aforementioned upper limit for the value that indicates the degree of increase in packet transfer rate.

These intermediate nodes or destination nodes can have a means which predicts, on the basis of the predicted packet transfer rate, that congestion will occur.

In addition, the intermediate nodes or destination nodes can have a means for notifying the source nodes of congestion when congestion is predicted.

The invention predicts the packet transfer rate and to congestion prediction; and is characterised in that:
for each destination address or path or channel identifier of packets being transferred through the transmission lines, an upper limit is stipulated for a value that indicates the degree of increase in packet transfer rate;
there is provided a means for detecting the transfer rate of currently arriving packets, and a means for predicting the maximum packet transfer rate after time t on the basis of (a) this detected packet transfer rate and (b) the aforementioned stipulated upper limit for the value indicating the degree of increase in packet transfer rate.

This rate prediction means which predicts the maximum packet transfer rate can have a means whereby maximum packet transfer rate *V(t)* after time *t* is obtained by computation using: 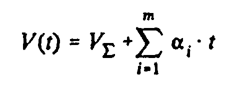 where α_{*i*} *(i=1 ∼ m)* are the upper limits stipulated for packet acceleration and *V*_{*Σ*} is the total current packet rate.

The rate prediction means can also have a means for obtaining the maximum packet transfer rate ***V(t)*** after time ***t*** by computation using: 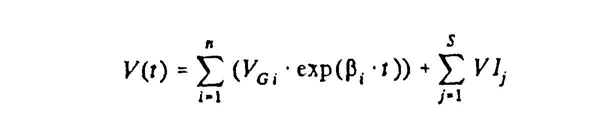 where *exp(β)* is the upper limit stipulated for packet acceleration ratio; and where the transmission lines are divided into ***n*** groups; and where, for each group, the computation is based on (a) the maximum acceleration ratio coefficient β_{*i*} and the maximum acceleration ratio ***e***^{***βi***} ***(i=1 ∼ n***) within the group in question, (b) the current packet transfer rates ***V***_{***G1***} ***∼ V***_{***Gn***} for the various groups; and where *Vl*_{*j*} is the initial bit rate at each source node and S is the total number of source nodes. Note that there is no second term when a lower limit is established for packet transfer rate at the source nodes.

The invention relates to packet transfer control at source nodes on the basis of congestion prediction signals; and is characterized in that, in a source node of a packet network wherein sending and receiving of packets is carried out between source and destination nodes via intermediate nodes, and where an upper limit has been established for the permissible packet transfer rate of these packets:
there is provided (a) a means for transmitting packets at a transfer rate that is within the aforementioned upper limit for transfer rate and which corresponds to a value indicating the degree of increase in packet transfer rate up to a prescribed value, and (b) a means whereby packet transfer rate is decreased when a congestion prediction signal to the effect that congestion will occur is received from an intermediate node or a destination node.

Instead of the arrival of a congestion prediction signal when congestion is predicted, there can be provided a means whereby packet transfer rate is decreased as a result of the non-arrival of requests for increase in packet transfer rate from an intermediate node or a destination node.

There can be provided a means whereby, when a congestion prediction signal is received, packets are transmitted at a transmission interval which is ***k (k>1)*** times the packet transmission interval corresponding to the packet transfer rate at that point in time. There may also be provided a means whereby, when a congestion prediction signal is received, packets are transmitted at a decreased packet transfer rate, said decreased rate being obtained by decreasing the packet transfer rate at that point in time by a fixed ratio or a constant exponential ratio.

There can be provided a packet transmission control circuit whereby packet transfer rate is decreased on the basis of a congestion prediction signal that is received.

This packet transmission control circuit has a table of packet transmission intervals said table having elapsed times for addresses and packet transmission intervals which become exponentially shorter with elapsed time - and can carry out packet transmission using this table. In addition, when a stipulated packet transfer rate is reached, the packet transmission control circuit returns to an elapsed time address corresponding to this stipulated packet transfer rate, and transmission of packets using the packet transmission intervals in the table can resume. Moreover, if a congestion prediction signal is received from the network, the packet transmission control circuit can also transmit packets after returning to an address with a value that has been decreased by a fixed number or a fixed ratio.

In accordance with a second aspect of the present invention we provide a method of congestion avoidance in packet networks in which packets are transferred to a network node from a number of respective source nodes via a respective transmission line, the transfer being carried out at a transfer rate in accordance with an established upper time limit, the method comprising causing each network node to predict the packet transfer rate on the basis of the total packet rate on the transmission line and a round trip delay time t between the network node and the furthest source node, and wherein, when congestion is predicted, notifying the aforementioned source nodes that congestion is anticipated; and causing each respective source node to decrease its current packet transfer rate when this notification to the effect that congestion is expected is received, characterised in that the degrees of increase of the transfer rate have an upper limit set by an acceleration (α) or an acceleration ratio (exp(β)) which respectively indicate the rate of change with time or the ratio of change with time of the packet transfer rate; and in that the method further comprises causing each network node (2,20) to predict the packet transfer rate on the basis of the acceleration (*α*) or the acceleration ratio (exp(*β*)).

In accordance with a third aspect of the invention, we provide a congestion avoidance method for an integrated network wherein: packets are transferred to a network node from a number of respective source nodes via a respective transmission line; an upper limit is established for the packet transfer rate of all source nodes; source nodes include source nodes which can decrease the packet transfer rate and source nodes which do not decrease the packet transfer rate, upon receiving notification that congestion is anticipated; and also source nodes which can decrease the packet transfer rate during transmission at above a stipulated rate, but which do not decrease the packet transfer rate during transmission at below the stipulated rate; wherein source nodes which can decrease their packet transfer rate send packets at transfer rates of which degrees of increase have an upper limit set by an acceleration (α) or an acceleration ratio (exp (β)), wherein the method further comprises causing each network node to predict the packet transfer rate on the basis of the total packet rate on the transmission line and the acceleration (α) or the acceleration ratio (exp(β)), and a round-trip delay time t between the network node and a respective source node and wherein if congestion is predicted by a network node, causing the network node to send a congestion prediction signal to the respective source nodes; and causing each source node to decrease their packet transfer rate, when the congestion prediction signal is received, taking into account the predicted rise in rate associated with the inclusion of source nodes that do not decrease rate.

Thus the invention relates to a method for avoidance of congestion in packet networks; and is characterized in that, in respect of methods for congestion avoidance in packet networks wherein (a) sending and receiving of packets is carried out between source nodes and destination nodes via intermediate nodes, and (b) an upper limit has been established for the packet transfer rate that is permissible at the aforementioned source nodes:
(1) the aforementioned source nodes transmit packets within the limits of the permissible packet transfer rate and within an upper limit for a value indicating the degree of increase in packet transfer rate; (2) the aforementioned intermediate nodes or destination nodes predict the packet transfer rate at time t later on the basis of (a) the packet transfer rate of transit packets or the packet transfer rate of incoming packets, and (b) the aforementioned upper limit for the value indicating the degree of increase in packet transfer rate; (3) when congestion is predicted, the aforementioned source nodes are notified that congestion is anticipated; (4) when the aforementioned source nodes receive this notification to the effect that congestion is anticipated, they decrease the packet transfer rate at that point in time.

This value indicating the degree of increase in packet transfer rate can be acceleration, or it can be an acceleration ratio.

When source nodes receive notification that congestion is anticipated, they can decrease the packet transfer rate by a fixed value. They can also decrease the packet transfer rate by a fixed ratio or a constant exponential ratio.

Moreover, notification to the effect that congestion is anticipated can be accomplished by not transmitting a packet transfer rate increase request signal to the source nodes.

Furthermore, a lower limit or an initial bit rate can be established for packet transfer rate at source nodes.

### Working of the Invention

To transmit packets from a source node of a packet network according to this invention, a maximum permissible packet transfer rate and a minimum packet transfer rate *(≥0)* are set, and in addition to these, an upper limit is established for the bit rate increase (i.e., the acceleration) or for the bit rate increase ratio (i.e., the acceleration ratio), said upper limit being set as a value indicating the degree to which packet transfer rate is increased up to the maximum packet transfer rate. Each source node is able to increase the packet transfer rate within the limits of this acceleration or acceleration ratio, up to the maximum permissible packet transfer rate.

As regards the detection of future occurrences of congestion, let the upper limit of, for example, acceleration, be α, and the current packet transfer rate be *V.* The packet transfer rate after time *t* can then be obtained by means of the formula *V(t) = V +* α·*t*, and this predicted packet transfer rate enables a decision to be made as to whether or not congestion is anticipated. On the basis of this prediction, when congestion is anticipated, an intermediate node or a destination node transmits a congestion prediction signal to the source node.

When the source node receives, from intermediate nodes or destination nodes of the packet network, a congestion prediction signal to the effect that congestion is anticipated, the source node decreases the packet transfer rate. Moreover, the source node can be notified that congestion is anticipated, and can thereby decrease its packet transfer rate, by means of the deletion of a bit rate increase request signal indicator, instead of by the reception of the aforementioned congestion prediction signal.

Packet transfer control therefore involves controlling, at the source nodes, the packet transfer rate of packets forwarded to the transmission lines, either by the arrival of the aforementioned congestion prediction signal, or by the non-arrival of a bit rate increase request signal. This packet transfer control provides a packet transmission interval table constructed in such manner that the packet transmission interval decreases exponentially, the purpose of said table being to enable packet transfer rate to be increased exponentially. A packet transfer rate that grows larger exponentially can be obtained by accessing this table. When the highest bit rate has been reached, table access is controlled so as to maintain this bit rate. On the other hand, when a congestion prediction is received, the control is aimed at decreasing the packet transfer rate at the source node, and this is achieved by returning to an address where the address value has been decreased by a fixed ratio or a fixed number.

### Brief Explanation of the Drawings

**Figure 1** explains the principles of congestion avoidance by conventional halting of transmission at source nodes.

**Figure 2** explains the principles of congestion avoidance by conventional window flow control.

**Figure 3** shows the configuration of a packet network to which the present invention is applied.

**Figure 4** represents this packet network in simplified form, showing terminal nodes and an intermediate node.

**Figure 5** is a block diagram showing the configuration of a variable packet rate terminal node, a fixed packet rate terminal node, and an intermediate node that employ a congestion avoidance method according to this invention.

**Figure 6** explains how packet transfer rates are calculated.

**Figure 7** explains the temporal relation between (1) the flow rate of packets output from a packet transmitting terminal node and (2) the flow rate of packets input to an intermediate node.

**Figure 8** shows the results of simulation of congestion avoidance at an intermediate node when k=1.25.

**Figure 9** shows the temporal relation between (1) the flow rate of packets output from a packet transmitting terminal node and (2) the flow rate of packets input to an intermediate node, according to Embodiment 2.

**Figure 10** shows the results of simulation of congestion avoidance at an intermediate node.

**Figure 11** shows the results of simulation of congestion avoidance at an intermediate node.

**Figure 12** shows the configuration of the variable rate terminal nodes, fixed rate terminal nodes, and intermediate nodes that are used in the congestion avoidance method according Embodiment 3.

**Figure 13** shows the relation between the bit rates of the Constant Bit Rate (CBR) service and the Variable Bit Rate (VBR) service.

**Figure 14** shows change of bit rate with time for Constant Bit Rate (CBR) service (fixed acceleration ratio).

**Figure 15** shows change of bit rate with time for Variable Bit Rate (VBR) service (fixed acceleration ratio).

**Figure 16** shows the situation where there is a bit rate decrease in Variable Bit Rate (VBR) service in a case where it has been predicted that total bit rate will reach the upper limit for throughput.

**Figure 17** is a block diagram showing the configuration of a packet rate predictor.

**Figure 18** is a block diagram showing another configuration for a packet rate predictor.

**Figure 19** is a block diagram showing the configuration of a packet transfer control circuit.

**Figure 20** shows the contents of a table of packet transmission intervals.

**Figure 21** is a block diagram showing another configuration for a packet transfer control circuit.

**Figure 22** shows the contents of a table of packet transmission intervals.

### Embodiments

Embodiments of the present invention will now be explained with reference to the accompanying drawings.

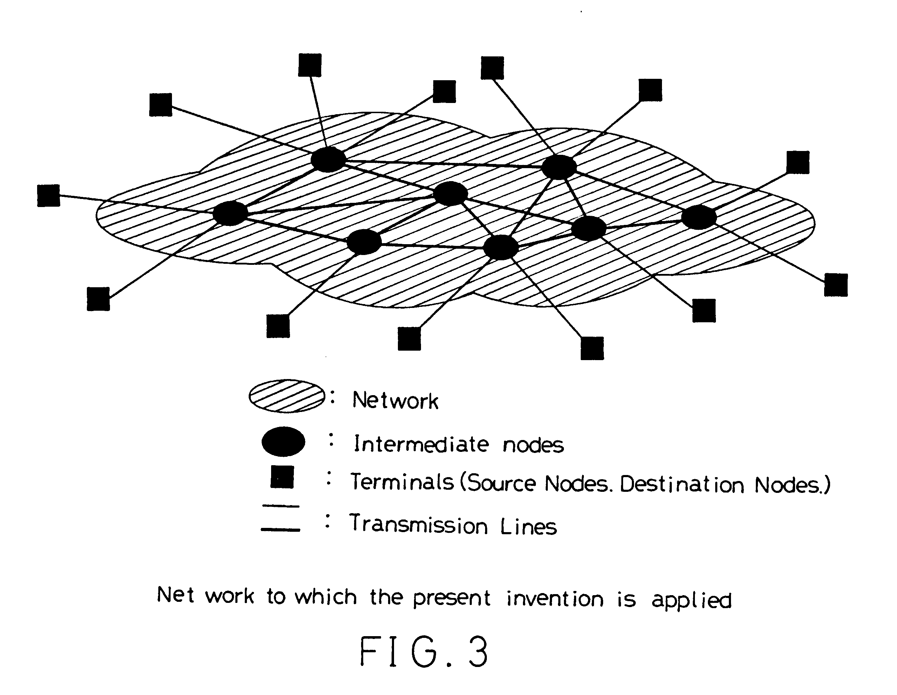

**Figure 3** shows an example of a network configuration to which this invention is applicable, and comprises intermediate nodes 2 interconnected by transmission lines 1, and packet terminal nodes 3 provided for these intermediate nodes 2.

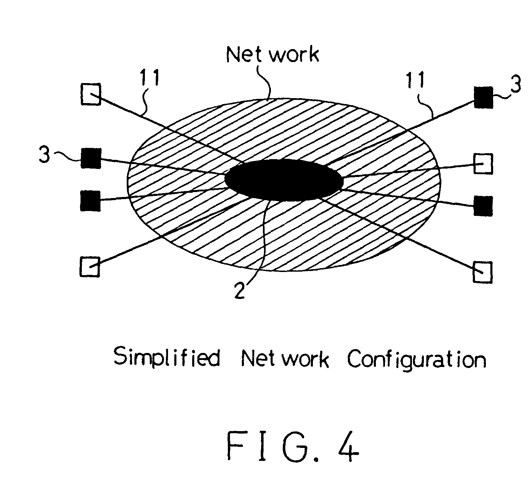

If this packet network is represented in abbreviated form by focusing on a single intermediate node 2, the simplified configuration shown in **Figure 4** can be obtained, wherein packet transmitting terminal nodes and packet receiving terminal nodes are connected via intermediate node 2. Even though the network is thus simplified to a single intermediate node 2, the generality of the working of congestion avoidance is not lost. In other words, there are no topological restrictions such as in the media-access control (MAC) of LANs (e.g., Ethernets, token passing, FDDI and DQDB).

### Embodiment 1

An example wherein packet transfer is controlled using the acceleration of packet transfer rate will now be described.

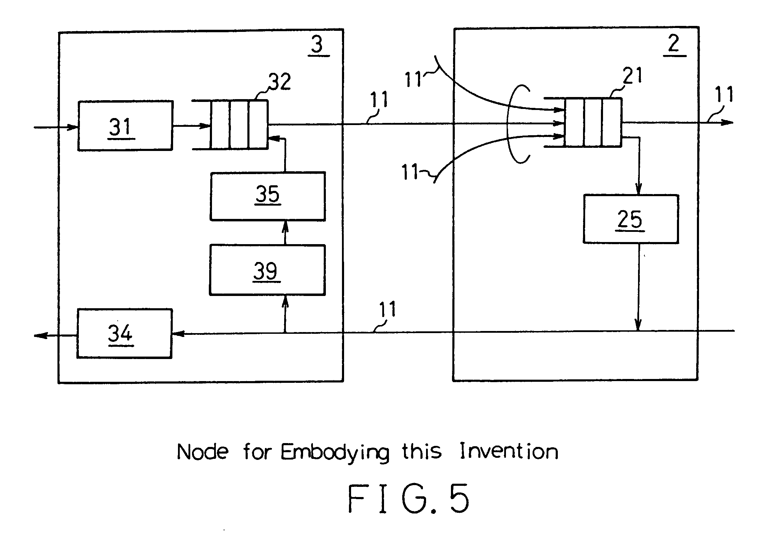

**Figure 5** illustrates the configuration of a congestion avoidance method comprising transmit-side packet terminal node 3 (hereinafter, referred to as *packet transmitting terminal node 3*) and intermediate node 2 or destination node 2, these two nodes being based on the configuration depicted in Figure 4. It may 'be noted that the configuration of the receive-side terminal destination node is symmetrical with that of the transmit-side node, and is therefore omitted.

Intermediate node 2 has buffer memory 21 and congestion prediction circuit 25. In addition, packet transmitting terminal node 3 has packet assembly circuit 31, buffer memory 32 and packet disassembly circuit 34, and is also provided with packet flow control (packet transmission interval control) circuit 35 which controls the forwarding of packets from buffer memory 32, and congestion prediction signal receiving circuit 39, which receives congestion prediction signals that have been sent from intermediate node 2 and notifies packet flow control circuit 35 of these.

Data for transmission is packetized by packet assembly circuit 31 and sent to buffer memory 32. Under control of packet flow control circuit 35, the forwarding of packets in buffer memory 32 to packet transmission line 11 is started at a packet transmission interval corresponding to a prescribed low packet transfer rate (the initial rate). Packet flow control circuit 35 goes on shortening the packet transmission interval as time passes, until the maximum packet transfer rate is reached, while maintaining the increase in packet transfer per unit time ― in other words, the acceleration of packet transfer rate - below a prescribed value which has been stipulated. In addition, when congestion prediction signal receiving circuit 39 receives a congestion prediction signal, packet transfer rate is decreased to give a packet transmission interval which is ***k (k>1)*** times the packet transmission interval corresponding to the packet transfer rate at that point in time, whereupon packet transfer rate is again increased while maintaining the acceleration below the stipulated value.

An example will now be given of a method for calculating packet transfer rate. Let the minimum packet transfer rate (the initial rate) be **v**_{***min***} (bit/sec) (*v*_{*min*}*≥0*)*,* the maximum packet transfer rate be **v**_{***max***} (bit/sec), the acceleration be α (bit/sec²), the fixed packet length be ***L*** (bit), the offset time (corresponding to the minimum packet transfer rate) be *t*_{*0*}, the time taken for packet transfer rate to increase from the minimum packet transfer rate to the maximum packet transfer rate be ***T*** (sec) (inclusive of offset time), and the current elapsed time (inclusive of offset time) within the time taken for packet transfer rate to increase be ***t***_{***now***} (sec). The packet transmission interval ***p***_{***now***} (sec) and the packet transfer rate **v**_{***now***} (bit/sec) at the present point in time can therefore be expressed as follows:$\text{α} {\text{= v}}_{\text{max}} \text{/} \text{T}$${\text{p}}_{\text{now}} \text{= L} \text{/(} {\text{α t}}_{\text{now}} {\text{) (v}}_{\text{min}} {\text{·T/v}}_{\text{max}} \text{≤} {\text{t}}_{\text{now}} \text{≤} \text{T} \text{)}$${\text{p}}_{\text{now}} {\text{= L/v}}_{\text{max}} \text{(} {\text{t}}_{\text{now}} \text{= T} \text{)}$${\text{v}}_{\text{now}} {\text{= L/p}}_{\text{now}}$

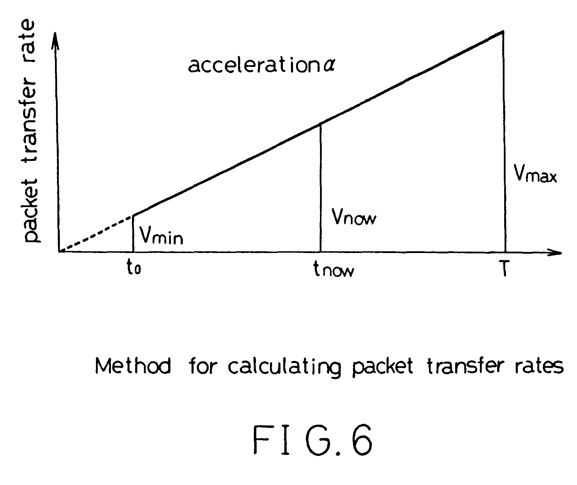

The relations among **v**_{***min***}**, v**_{***max***}**, v**_{***now***}**, *α*, *T, t***_{***now***} and ***t***_{***0***} are shown in **Figure 6.** In this figure, the horizontal axis is elapsed time within the time taken for packet transfer rate to increase, and the vertical axis is packet transfer rate.

When a congestion prediction signal is received, ***t***_{***now***}***/k (k>1)*** is made the new current elapsed time ***t***_{***now***} (if t_{*now*} is less than *t*_{*0*}, it is rounded up to *t*_{*0*}), and the packet transmission interval ***p*** is obtained from **Equations (1) ∼ (4).** In this case as well, the maximum value of *t* is *T.* In other words, this is equivalent to dividing the current packet transfer rate by ***k**,* and this technique is disclosed in US Patent 400858 as well.

In each intermediate node 2 of the packet network, congestion prediction circuit 25 monitors for congestion in the packet transmission lines, and when congestion is predicted on the basis of this monitoring, a congestion prediction signals are formed and sent via return packet transmission line P 11 to all packet transmitting terminal nodes that use this packet transmission line. It may be noted that the number of packets in unit time may be the number of packets in sliding window unit time, which will be described hereinafter. This may also be implemented in respect of mean value detection, which can be realized by a first or higher order recursive filter.

A threshold value ***V***_{***th***} is set so that ***V***_{***th***} ***≤ V***_{***now***}**,** where:$\text{2} {\text{D × α × n V}}_{\text{now}} {\text{=V}}_{\text{max}}$ or in other words, where the value obtained by adding the current packet transfer rate ***V***_{***now***} in the packet transmission line 11 in question to the product ***(2D* × α x *n)*** obtained by multiplying together (a) time **2D** (equal to or greater than the maximum round-trip delay time between packet transmitting terminal node 3 and intermediate node 2), (b) acceleration α at packet transmitting terminal node 3, and (c) the number *n* of packet terminal nodes that use packet transmission line 11, is equal to the permissible packet transfer rate ***V***_{***max***}***.***

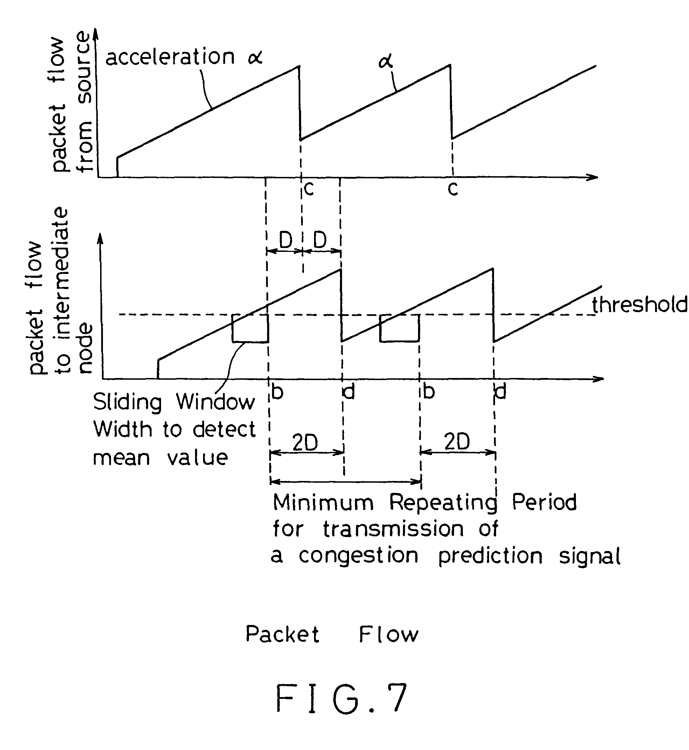

**Figure 7** shows the relation between (1) the flow rate per unit time of packets output from packet transmitting terminal node 3, and (2) the flow rate per unit time of packets input to intermediate node 2, where ***D*** is the delay time between packet transmitting terminal node 3 and intermediate node 2. Intermediate node 2 predicts congestion at time ***b*** and sends a congestion prediction signal to packet transmitting terminal node 3. Packet transmitting terminal node 3 receives the congestion prediction signal at time ***c***, which is delay time ***D*** later, and decreases the packet transfer rate by ***1/k (k>1)***. The packet transfer rate decreases at intermediate node 2 at time ***d***, which is ***2D*** after the congestion prediction signal was sent. Consequently, in order that no buffer overflow occurs in the interval from time ***b*** to time ***d***, the upper limit of acceleration α at packet transmitting terminal node 3, the threshold value and the minimum repeating period for transmission of a congestion prediction signal have to be selected after taking delay time ***D*** and the number of packet terminal nodes ***n*** into consideration.

A method whereby a congestion prediction signal results in the current packet transmission interval being multiplied by a factor ***k*** is one which permits equitable use of transmission line 11 by all packet terminal nodes which forward packets. Furthermore, a method whereby a congestion prediction signal results in the current packet transfer rate being decreased by a fixed value is one which gives priority use of transmission line 11 to those packet terminal nodes.

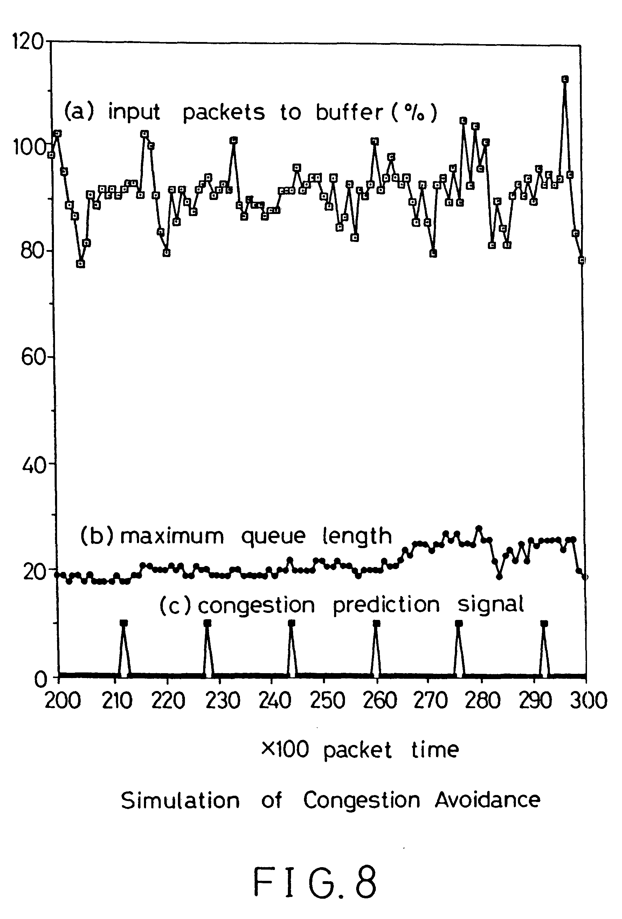

**Figure 8** shows the results of simulation of congestion avoidance in intermediate node **2** when k=1.25. The simulation parameters were as follows:
Fixed packet length L 53 bytes
Packet line rate (packet transfer rate) 150 Mbit/sec
Number ***n*** of packet terminal nodes using congested intermediate node 100
Minimum packet transfer rate ***A*** (initial rate) of packet transmitting terminal nodes 300 kbit/sec
Maximum packet transfer rate **V**_{***max***} of packet transmitting terminal nodes 15 Mbit/sec
Time ***T*** taken for packet transfer rate increase of packet transmitting terminal nodes 250 msec
Increase in packet transfer (acceleration: α) of packet transmitting terminal nodes 58.8 Mbit/sec²
Round-trip delay time ***2D*** 2 msec
Threshold ***V***_{***th***} (mean packet transfer rate in 1 msec sliding window) 150×0.85 Mbit/sec
Minimum repeating period for transmission of a congestion prediction signal 4.5 msec

In **Figure 8,**(a) indicates the number of packets which are input to buffer memory 21 of intermediate node 2 as a percentage of packets offered, as observed every 100 packets (0.282 msec); (b)indicates the maximum queue length in buffer memory 21 in terms of number of packets; and (c)shows the times at which a congestion prediction signal is produced. It will be seen that if buffer capacity is 40 packets, packet dropping can be avoided and a throughput of 0.9 can be guaranteed.

### Embodiment 2

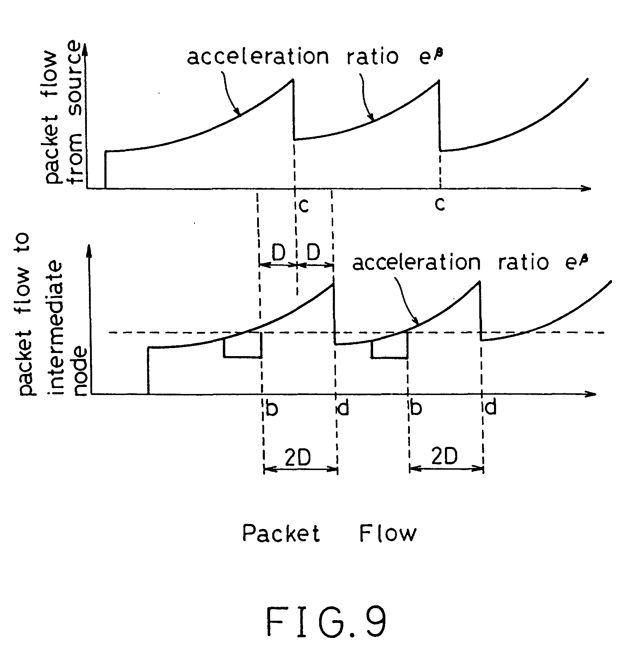

Next, an explanation will be given, with reference to **Figures 5** and **9,** of a configuration wherein control of packet transfer is carried out using the packet transfer rate acceleration ratio.

In this configuration, congestion prediction circuit 25 of intermediate node 2 detects when the value obtained by adding the current packet transfer rate ***V***_{***now***} in the packet transmission line to the product ***(2D×β×V***_{***now***}***)*** obtained by multiplying (a) time ***2D*** (equal to or greater than the maximum round-trip delay time between packet transmitting terminal node 3 and intermediate node 2), (b) acceleration ratio coefficient β (acceleration ratio: *e*^{*β*} ), and (c) the aforementioned *V*_{*now*}; or when *V*_{*now*} *× exp(β·2D)* exceeds the permissible packet transfer rate ***V***_{***max***}, and makes this a prediction of congestion.

When congestion prediction signal receiving circuit 39 receives a congestion prediction signal, packet transfer rate is decreased by setting a packet transmission interval corresponding to (***A*** × (v_{*now*}/A)^{*y*}), which is the value obtained by dividing the packet transfer rate at that point in time v_{*now*} by the minimum packet transfer rate *A*, raising this to the power ***y*** where ***y*** is a constant (*y<1*), and multiplying this by the minimum packet transfer rate *A*.

An example of how packet transfer rate is calculated in this case will now be shown. Let the minimum packet transfer rate (the initial rate) be ***A*** (bit/sec), the maximum packet transfer rate be **V**_{***max***} (bit/sec), the acceleration ratio coefficient be β (1/sec), the time taken for packet transfer rate to increase from the minimum packet transfer rate to the maximum packet transfer rate be ***T*** (sec), the fixed packet length be ***L*** (bit), and the current elapsed time within the time during which packet transfer rate increases be *t*_{*now*} (sec). The packet transmission interval ***p***_{***n***}_{**ow**} (sec) and the packet transfer rate **v**_{***now***} (bit/sec) at the present point in time are therefore:${\text{v}}_{\text{now}} \text{=} \text{A} \text{× exp(β ×} {\text{t}}_{\text{now}} \text{)}$${\text{p}}_{\text{now}} \text{= L} {\text{/v}}_{\text{now}}$$\text{β = (1/} \text{T} {\text{) log(v}}_{\text{max}} \text{/} \text{A} \text{)}$

In addition, the packet transfer rate v_{*up*} (bit/sec) at time δ*t* (sec) after current time *t*_{*now*} will be:${\text{v}}_{\text{up}} \text{= A} \text{× exp(β x (} {\text{t}}_{\text{now}} \text{+} \text{δt} {\text{)) = v}}_{\text{now}} \text{· exp(β · δ} \text{t} \text{)} {\text{≒ v}}_{\text{now}} \text{(1} \text{+ β} \text{· δ} \text{t)} \text{...(β ·δ} \text{t} \text{«1)} {\text{= v}}_{\text{now}} {\text{+ v}}_{\text{now}} \text{× β × δ} \text{t}$

Acceleration at the current point in time is therefore:${\text{v}}_{\text{now}} \text{× β × δ} \text{t} \text{/δ} \text{t} {\text{= v}}_{\text{now}} \text{x β (} \text{bit} {\text{/sec}}^{\text{2}} \text{)}$ which is proportional to packet transfer rate at the current point in time.

When a congestion prediction signal is received, ***y × t***_{***now***} ***(y<1)*** is set as the new current elapsed time ***t***_{***now***}, and the decreased packet transfer rate **v**_{***down***} (bit/sec) can be obtained from **Equation (5)**, giving the following:${\text{v}}_{\text{down}} \text{=} \text{A} \text{× exp(β ×} \text{y} \text{×} {\text{t}}_{\text{now}} \text{)} \text{=} \text{A} \text{× (exp(β ×} {\text{t}}_{\text{now}} {\text{))}}^{\text{y}} \text{=} \text{A} {\text{× (v}}_{\text{now}} \text{/} \text{A} {\text{)}}^{\text{y}}$ This is equivalent to decreasing the transfer rate by a constant exponential ratio, so transfer rate may simply be decreased to (v_{*now*})^{*y*}.

Threshold *V*_{*th*} is set so that *V*_{*th*} *≤ V*_{*now*} when the value (*V*_{*now*}+*V*_{*now*}·β·*2D*), obtained by adding ***V***_{***now***} to the product of (a) time ***2D*** (which is greater than or equal to the maximum round-trip delay time between packet transmitting terminal nodes 3 and intermediate node 2), (b) acceleration ratio coefficient *β* (acceleration ratio: ***e***^{***β***}**),** and (c) current packet transfer rate ***V***_{***now***} **i**n the packet transmission line , or ***V***_{***now***}***·exp(β·2D)***, is equal to the permissible packet transfer rate ***V***_{***max***}**,** or in other words, when:${\text{V}}_{\text{now}} \text{=} {\text{V}}_{\text{max}} \text{/(1 + β · 2} \text{D} \text{)}$

**Figure 9** shows the temporal relation between (1) the flow rate of packets output from packet transmitting terminal node 3, and (2) the flow rate of packets input to intermediate node 2. Let the delay time between packet transmitting terminal node 3 and intermediate node 2 be ***D**.* It is assumed that this delay time ***D*** includes a delay fluctuation at intermediate node 2. Intermediate node 2 predicts congestion at time ***b*** when packet transfer rate corresponds to the threshold level, and sends a congestion prediction signal to packet transmitting terminal node 3. Packet transmitting terminal node 3 decreases the packet transfer rate at time ***c***, which is time ***D*** after the congestion prediction signal was sent, and the packet transfer rate drops at intermediate node 2 at time ***d**,* which is time ***2D*** after the congestion prediction signal was sent. Accordingly, in order that no buffer overflow occurs in the interval from time ***b*** to time ***d**,* consideration must be given to delay time ***D*** and congestion prediction time when selecting (a) coefficient *β* for determining the packet transfer acceleration ratio at packet transmitting terminal node 3, (b) coefficient ***y (y<1)*** for decreasing the packet transfer rate when a congestion prediction signal is received, (c) threshold level ***V***_{***th***}, and (d) the minimum repeating period for transmission of congestion prediction signals.

An explanation will now be given of how these parameters are set.

Let it be assumed that N packet transmitting terminal nodes are currently using the packet transmission line under consideration, and that the current packet transfer rate of packet transmission terminal node i ***(i=1 ∼ n)*** is **v**_{***now***}. The packet transfer rate *V*_{*now*} observed in the packet transmission line under consideration is therefore: 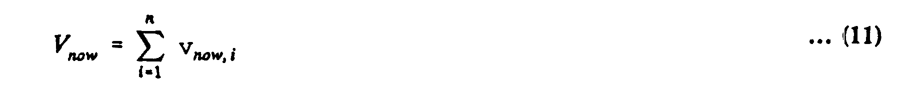 In addition, the packet transfer rate ***V***_{***up***} that will be predicted in the packet transmission line in question after time ***T***_{***p***} from the present time will be:

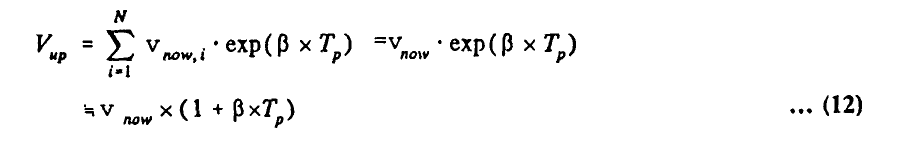

Thus, ***V***_{***up***} can be predicted without knowing the number of packet transmitting terminal nodes that are using the packet transmission line under consideration. Note that the quantity of packets which the packet transmitting terminal node transmits immediately after packet transfer begins cannot be predicted at an intermediate node; but because this packet quantity is small, it may be ignored. On the other hand, if it cannot be ignored, the threshold level ***V***_{***th***} may be set on the basis of assigning this initial value a fixed packet transfer rate as an offset. Accordingly, if it is assumed that ***T***_{***p***} ***=2D*** and ***V***_{***up***}***=V***_{***max***}, the threshold level ***V***_{***th***} can be determined from **Equations (10)** and **(12)** independently of the number of terminals in use.

In the case of this embodiment, when a packet transmitting terminal node receives a congestion prediction signal from an intermediate node, the resulting decrease in packet transfer rate is in proportion to the packet transfer rate at that point in time. For this reason, if congestion of a packet transmission line continues at an intermediate node for more than a certain time, the packet transfer rates of the transmitting terminal nodes in use all become more or less equal. Fairness can therefore be guaranteed for the packet transmitting terminal nodes that are in use. Moreover, these packet transmitting terminals can be given priority for using the network if the packet transfer rate is decreased by a fixed ratio when a congestion prediction signal is received. The same result is achieved if the transfer rate in **Equation (5)** is obtained after subtracting a fixed time ***t*** from the current elapsed time ***t***_{***now***} and taking this as the new elapsed time.

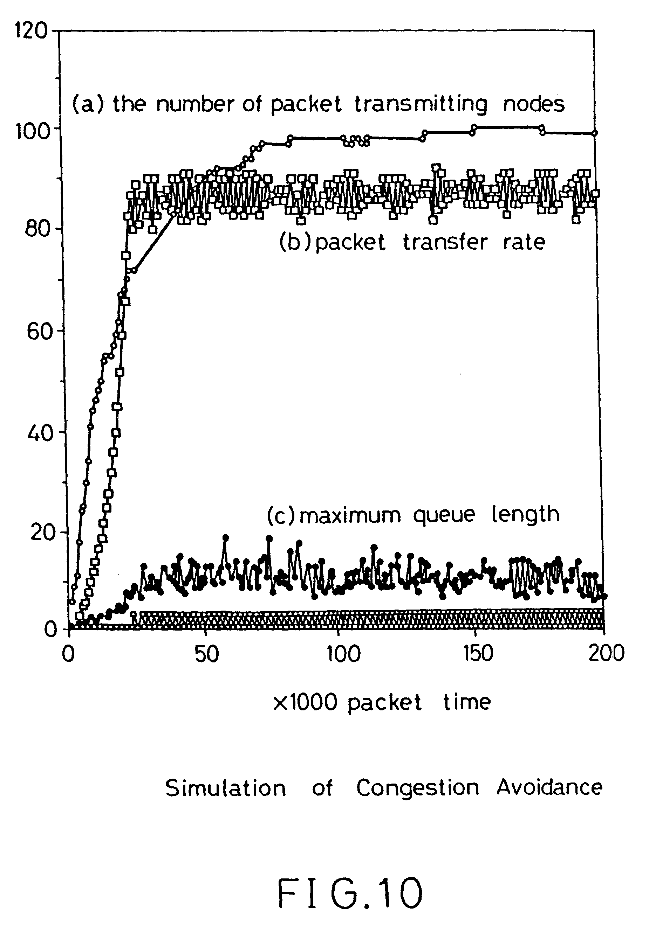

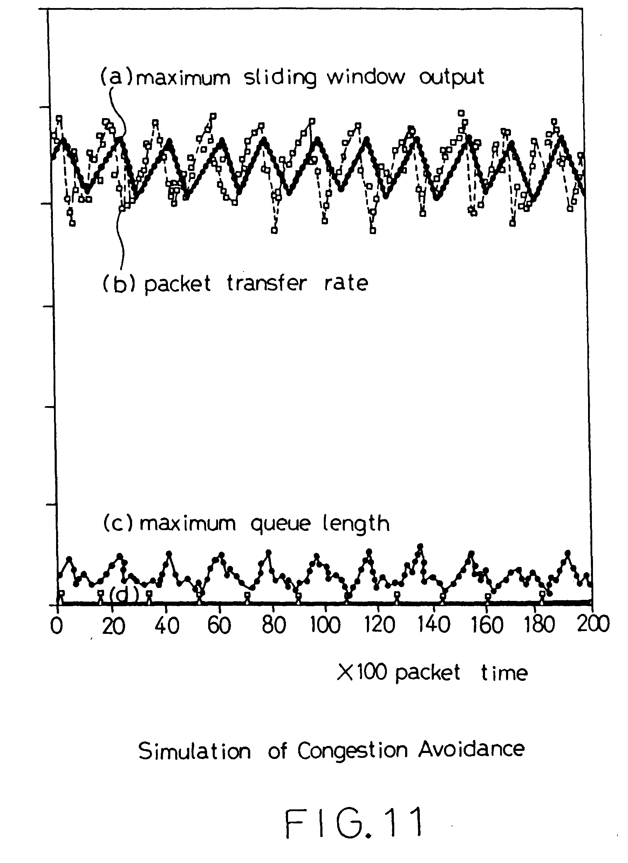

The results of a simulation of congestion avoidance in intermediate node 2 and packet transmitting terminal node 3 when rate reduction coefficient ***y=0.87*** are shown in **Figures** **10** and **11**. The simulation parameters used are as follows. Note that the round-trip delay times between congested intermediate node 2 and each packet transmitting terminal node 3 are assumed to be distributed uniformly between 2 msec and 3 msec.
Fixed packet length L 53 bytes
Packet line rate (packet transfer rate) 150 Mbit/sec
Number ***n*** of packet transmitting terminal nodes which can use congested intermediate node simultaneously 100
Minimum packet transfer rate **A** (initial rate) of packet transmitting terminal nodes 300 kbit/sec
Maximum packet transfer rate v_{*max*}
   of packet transmitting terminal nodes 15 Mbit/sec
Time **T** taken for packet transfer rate increase of packet transmitting terminal nodes 100 msec
Acceleration ratio coefficient β of packet transmitting terminal nodes 39.12 (1/sec)
Acceleration ratio *exp(β)* of packet transmitting terminal nodes 50¹⁰= 9.76 × 10¹⁶
Round-trip delay time ***2D*** 2 msec ∼ 3 msec
Threshold ***V***_{***th***} (mean packet transfer rate in 1 msec sliding window) 150×0.85 Mbit/sec
Minimum repeating period for transmission of a congestion prediction signal 4.5 msec

**Figure 10** plots the results of observations made every 1000 packets (2.82 msec) of changes with time in the maximum buffer memory queue length and the packet transfer rate of congested intermediate node 2, for the case where a large number of packet transmitting terminal nodes 3 all began transmitting packets at once. In this figure, (a)is the number of packet transmitting terminal nodes currently transmitting packets,(c)is the maximum queue length in the buffer memory within the observation interval, (b)indicates the packet transfer rate in the buffer input of the congested intermediate node as a percentage of a base packet transfer rate of 150 Mbit/sec, and(d)shows the times at which a congestion prediction signal is produced. This simulation shows that even when a large number of packet transmitting terminal nodes 3 begin transmitting packets simultaneously, congestion avoidance is performed in a stable manner and with no buffer overflow, despite small buffer capacity.

**Figure 11** plots the results of observations made every 100 packets (0.282 msec) of the congestion avoidance situation for the case where 100 packet transmitting terminal nodes 3 are using the packet transmission lines of congested intermediate node 2. In this figure, a indicates the maximum value of the sliding window output during the observation time as a percentage, while b,c and d are the same as in **Figure 10.** This simulation shows that a congestion prediction signal is produced at the point in time when sliding window output exceeds the threshold level, with congestion avoidance being carried out as a result.

### Embodiment 3

Next, an explanation will be given of congestion avoidance in packet integrated networks wherein the network has variable rate terminal nodes and fixed rate terminal nodes.

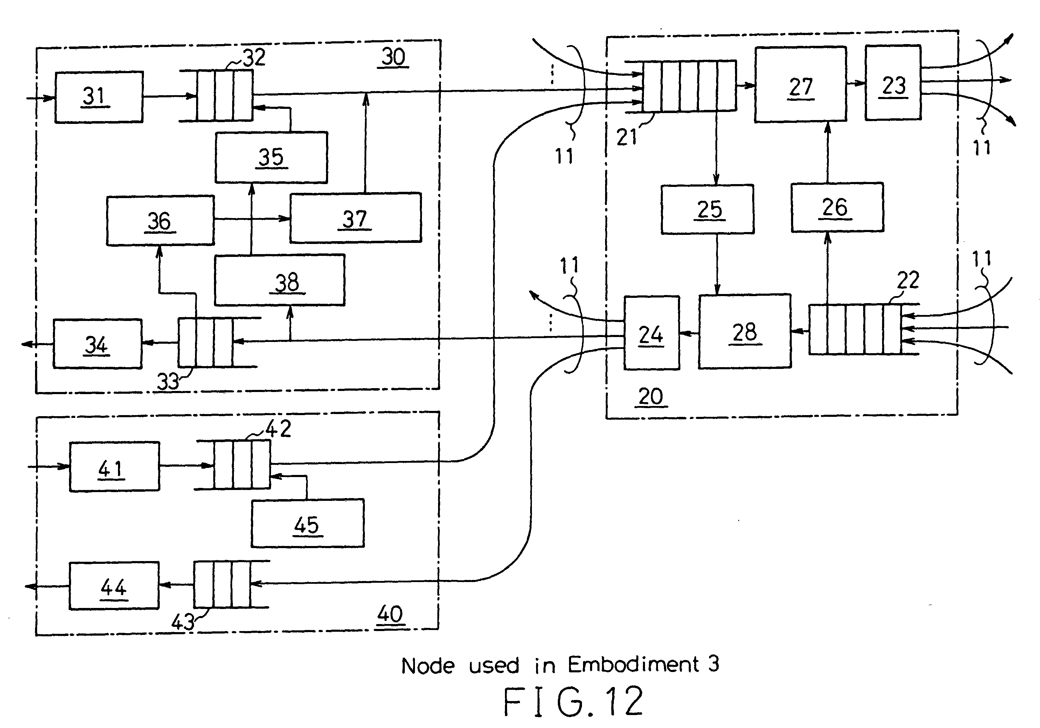

**Figure 12** shows a single intermediate node 20, a single variable rate terminal node 30 and a single fixed rate terminal node 40, of a packet integrated network. In this case, intermediate node 20 is interconnected in mesh-like manner within the packet integrated network by way of transmission lines 11. Variable rate terminal nodes 30 and fixed rate terminal nodes 40 are each connected by way of transmission lines 11 to corresponding intermediate nodes 20, and the 1:1, 1:N, N:1 and N:M paths that are established between them are based on two-way connections via intermediate nodes 20. Note that apart from the 1:1 connections, the paths involve branching and joining at intermediate nodes 20.

In **Figure 12,** variable rate terminal node 30 comprises packet assembly circuit 31 and buffer memory 32 which carry out packet transmission, plus buffer memory 33 and packet disassembly circuit 34 which carry out packet receiving, plus packet flow control circuit 35, buffer capacity detection circuit 36, rate increase request indication transmitting circuit 37 and rate increase request indication receiving circuit 38.

Fixed rate terminal node 40 comprises packet assembly circuit 41 and buffer memory 42 which carry out packet transmission, buffer memory 43 and packet disassembly circuit 44 which carry out packet receiving, plus packet flow control circuit 45.

Intermediate node 20 comprises buffer memories 21 and 22 and path selection circuits 23 and 24, which carry out relaying of packets in both directions, plus congestion prediction circuits 25 and 26, and rate increase request indication deleting circuits 27 and 28.

Next, the working of the embodiment shown in **Figure 12** will be explained.

### (1) Transmission when a path has been established between variable rate terminal node 30 and an opposing node

### 1. Working of variable rate terminal node 30

Information that has been input to variable rate terminal node 30 is packetized by packet assembly circuit 31 and stored in buffer memory 32. Packet flow control circuit 35 controls buffer memory 32 and sends packets to transmission line 11 at a prescribed packet transfer rate.

Meanwhile, packets which have arrived from transmission line 11 are stored in buffer memory 33 and output after the original information has been reconstructed by packet disassembly circuit 34. At this time, buffer capacity detection circuit 36 detects the buffer capacity of buffer memory 33, and if this is below a prescribed value at which there is no danger of overflow, rate increase request indication transmitting circuit 37 is made to operate.

If the buffer capacity of buffer memory 33 is below the prescribed value, rate increase request indication transmitting circuit 37 repeatedly sends packets containing a rate increase request indication to transmission line 11, at or within a prescribed time interval. The packets used for these packets that contain a rate increase request indication may either be new packets with rate increase request indications, or packets transmitted from buffer memory 32 and which have had a rate increase request indication formed in a rate increase request indication area that has been established in part of said packets. Note that in this latter case, if the prescribed time interval elapses without there being any transmitted packets, new packets with rate increase request indications will be generated.

Thus, variable rate terminal node 30 will ordinarily transmit packets containing rate increase request indications at or within a prescribed time interval. On the other hand, if buffer memory 33 starts to overflow, buffer capacity detection circuit 36 suspends the operation of rate increase request indication transmitting circuit 37, and variable rate terminal node 30 on the transmitting side is notified to this effect by the fact that transmission of packets containing this rate increase request indication has stopped.

Rate increase request indication receiving circuit 38 monitors incoming packets, and if packets containing rate increase request indications are received at or within a prescribed time interval, the packet transfer rate control which packet flow control circuit 35 performs is maintained. On the other hand, if a packet containing the rate increase request indication has not been received within the prescribed time interval, it is recognised that there is a possibility of congestion, and packet flow control circuit 35 is controlled in such manner that it causes the packet transfer rate at that point in time to decrease.

### 2. Working of intermediate node 20

In intermediate node 20, packets from each terminal node are input via transmission lines 11 to buffer memories 21 and 22 and stored. Congestion prediction circuit 25 detects either the total transfer rate or quantity of packets input to buffer memory 21, or the total quantity of packets output from buffer memory 21. If congestion is predicted, it starts rate increase request indication deleting circuit 28. Likewise, congestion prediction circuit 26 starts rate increase request indication deleting circuit 27. On the basis of starting control by congestion prediction circuits 25 and 26, rate increase request indication deleting circuits 27 and 28 delete packets containing indications of requests for increases in the transfer rate of packets transmitted through corresponding paths or transmission lines in the opposite direction. When this deleting is applied to new packets carrying only rate increase request indications, these new packets themselves are deleted, whereas when it is applied to packets in part of which a rate increase request indication has been formed, this indication part (ex. correspond of BECN bit of Frame relay) is only deleted.

In the prediction of congestion in intermediate node 20, in order to obtain a prediction that is on the safe side, it is necessary to predict the round-trip delay time ***2d*** between intermediate node 20 and the most distant variable rate terminal node 30. This will be discussed later. It may be mentioned that this round-trip delay time ***2d*** includes the control delay time from detection by congestion prediction circuit 25 to packet transfer rate being decreased by packet flow control circuit 35, plus the delay times in the buffer memories of the intermediate node, etc.

Packets which have been output from buffer memories 21 and 22 and which have passed through rate increase request indication deleting circuits 27 and 28 are sent to transmission lines 11 after respective output paths have been selected by path selection circuits 23 and 24.

Thus, when congestion has been predicted by intermediate node 20 which lies between variable rate terminal nodes 30, variable rate terminal node 30 on the transmitting side can be notified to this effect by deleting the rate increase request indication pertaining to the path and transmission line related to the congestion. In other words, because packets containing rate increase request indications cease to be received within a prescribed time interval at the transmitting side variable rate terminal node 30, the possibility of congestion can be recognised and congestion at intermediate node 20 can be avoided by decreasing the packet transfer rate at that point in time.

### (2) Transmission when a path has been established between fixed rate terminal node 40 and an opposing node

A path between fixed rate terminal nodes 40 can be established when the proportion of Constant Bit Rate service (CBR/(CBR+VBR)) does not exceed the ratio ***F***that is allocated to CBR service in the transmission lines comprising the path, whereupon that path provides guaranteed capacity within the packet integrated network. This is the basis for establishing paths between all fixed rate terminal nodes 40. Consequently, in establishing a new path between fixed rate terminal nodes 40, if there are places in some of the transmission lines involved where ratio ***F*** allocated to CBR service is exceeded, then a fresh search is made for a path where this ratio is not exceeded, and that particular path is not allowed. This sort of restriction enables the upper limit of the proportion accounted for by fixed bit rate information in a packet integrated network to be kept below the ratio ***F***, and means that at least ***(1-F)*** can be allocated to transmission of variable bit rate information.

### 1. Working of fixed rate terminal node 40

Information which has been input to fixed rate terminal node 40 is packetized by packet assembly circuit 41 and stored in buffer memory 42. Packet flow control circuit 45 controls buffer memory 42 and sends packets to transmission line 11 at a prescribed packet transfer rate. Note that the maximum packet transfer rate is the packet transfer rate that was secured when the path was established.

Meanwhile, packets that have arrived from transmission line 11 are stored in buffer memory 43 and output after the original information has been reconstructed by packet disassembly circuit 44.

### 2. Working of intermediate node 20

The working of intermediate node 20 is the same as that of an intermediate node 20 in relation to a variable rate terminal node 30, but the operation of congestion prediction circuits 25 and 26 and rate increase request indication deleting circuits 27 and 28 is irrelevant to fixed rate terminal node 40.

Thus, in fixed rate terminal node 40 there is no buffer capacity detection circuit 36, rate increase request indication transmitting circuit 37 or rate increase request indication receiving circuit 38, all of which are provided in variable rate terminal node 30; and transmission control is performed simply by packet flow control circuit 45. This means that fixed rate terminal node 40 is not affected by notifications that congestion is predicted within the network. In other words, in transmission between fixed rate terminal nodes 40, packet transfer rate is controlled by packet flow control circuit 45 alone, independently of the state of the network.

In order to be able to avoid congestion without discarding packets, it is necessary to predict accurately the maximum value of packet transfer rate at intermediate node 20. An accurate prediction of this maximum packet transfer rate may be obtained on the basis of the upper limit of the acceleration or acceleration ratio of packet transfer rate. If acceleration is used, a maximum packet transfer rate increase that is dependent on the number of terminal nodes can be predicted. On the other hand, if acceleration ratio is used, a maximum packet transfer rate increase that is independent of the number of terminal nodes can be predicted.

However, in this embodiment, if the transfer rate is less than that secured by fixed rate terminal nodes 40 when the path was established, an increase in packet transfer rate at fixed rate terminal nodes 40 may be expected. Accordingly, if congestion has been predicted within the network, then because packet dropping will occur unless some decrease in packet transfer rate is contrived - said decrease taking into account the aforementioned anticipated increase in packet transfer rate at fixed rate terminal nodes 40 ― variable rate terminal nodes 30 will have to clarify the size of this decrease in packet transfer rate.

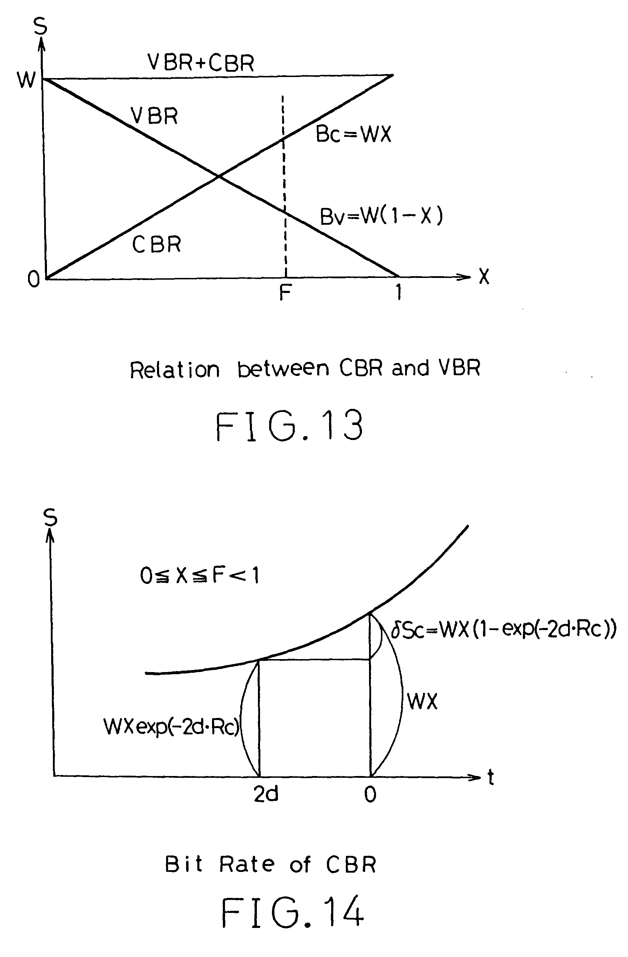

Next, the amount of decrease in packet transfer rate that is required to avoid congestion will be explained with reference to the graphs given in **Figures 13 ∼ 16.**

**Figure 13** shows the relation between bit rates in Constant Bit Rate (CBR) service and Variable Bit Rate (VBR) service. This is used to predict packet transfer rate at intermediate nodes 20.

In this figure, the horizontal axis X shows the proportion of Constant Bit Rate service (CBR/(CBR+VBR)), the vertical axis S is the throughput, and W is the maximum permissible throughput at which no packets from any transmission line 11 are discarded. Note that in a CBR service where the upper limit occupied by constant bit rate information is *F*, *0 ≤ X ≤ F < 1*.

Given that constant rate terminal nodes do not decrease packet transfer rate when congestion is predicted, it follows that maximum permissible throughput *W* will not increase at ***X=F.*** In other words, the time *(t=0)* at which the bit rate ***B***_{***c***} of the CBR service becomes ***WX*** and the bit rate ***B***_{***v***} of the VBR service becomes ***W(1-X)*** is predicted, and conditions such that these rates are not exceeded are obtained as follows.

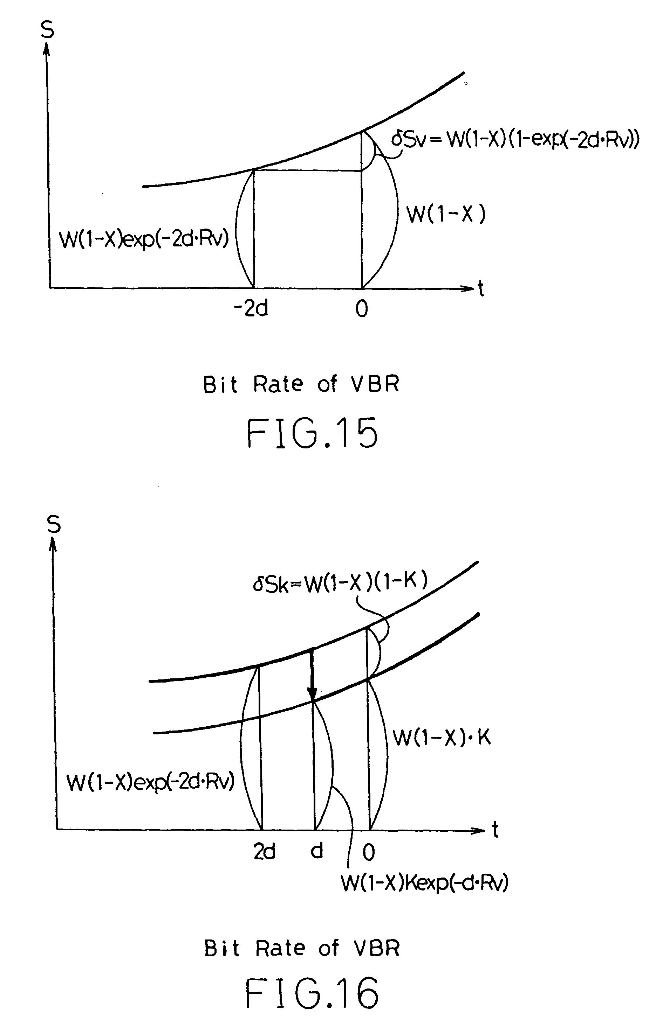

**Figures 14** and **15** show changes with time in bit rates of CBR and VBR services (for a fixed acceleration ratio). In these figures, the horizontal axis *t* is time and the vertical axis S is throughput. The acceleration ratios over time *2d* (the round-trip delay time between intermediate node 20 and the most distant variable rate terminal node 30) are ***exp(2d·Rc)*** and ***exp(2d·Rv)*** for the CBR and VBR services, respectively. ***Rc*** is the acceleration ratio coefficient of the CBR terminals, and ***Rv*** is the acceleration ratio coefficient of the VBR terminals.

The increase δ*Sc* in CBR service bit rate after time ***2d*** has elapsed is:$\text{δSc} \text{=} \text{WX} \text{(1 - exp(-2} \text{d} \text{·} \text{Rc} \text{))}$ and the increase δ*Sv* in VBR service bit rate after time ***2d*** has elapsed is:$\text{δSv = WX} \text{(1-} \text{X} \text{)(1- exp(-2} \text{d} \text{·} \text{Rv} \text{))}$ In addition, because total bit rate at ***t=0*** reaches the maximum permissible throughput ***W*,** the variable rate terminal nodes, which are able to decrease their packet transfer rates, are informed of this at time ***t=-2d.*** Since packets containing rate increase request indication do not arrive at these variable rate terminal nodes, bit rate is decreased after a maximum time delay of ***d*** by multiplying the packet transfer rate by ***K (0<K<1)***, and transmission continued at an acceleration ratio of ***exp(2d·Rv)*,** so that the rate becomes ***W(1-X)K*** at ***t=0.*** This is illustrated in **Figure 16.**

As is shown in **Figure 16,** the decrease δ*Sk* in packet transfer rate is:$\text{δSk = WX} \text{(1-} \text{X} \text{)(1-} \text{K} \text{)}$ which absorbs the respective rate increases δ*Sc* and *δSv* in the CBR and VBR services after time ***2d***. In other words, we may put:$\text{δ} \text{Sk} \text{≥} \text{δSc} \text{+ δ} \text{Sv}$

From the above, if the factor *K* for packet transfer rate decrease is made to satisfy:$\text{0 <} \text{K} \text{≤ exp(} \text{-} \text{2} \text{d} \text{·} \text{Rv} \text{) - (1 - exp(-2} \text{d · Rc} \text{))} \text{X} \text{/(1} \text{- X} \text{)}$ the total bit rate at ***t=0*** will not reach the maximum permissible throughput *W.* Note that if the bit rate acceleration ratios of both the VBR and CBR services are small (***1*»*2d·Rv>0*** and ***1*»*2d·Rc>0***), the following approximation is obtained:$\text{0 < K ≤} \text{1 - 2} \text{d·Rv} \text{-2} \text{d·Rc·X} \text{/(1-} \text{X} \text{)}$ which shows that the acceleration ratio of the CBR service is increased by a factor of ***X(1-X)*** relative to the VBR service. Accordingly, by reducing the acceleration ratio of the CBR service, the decrease in maximum permissible throughput to a level where no transmitted packets are discarded can be made smaller.

In addition, the maximum bit rate after time ***2d*** can be predicted at time ***t=-2d*** at intermediate node 20, using *(current bit rate*). (acceleration *ratio of CBR or VBR*, *whichever is the larger).*

Now, the foregoing explanation has illustrated a case where the rate increase ratio (i.e., the acceleration ratio) is fixed, but a similar explanation can be given if it assumed that it is the rate increase (i.e., the acceleration) that is fixed (***Rc*** at CBR terminals and ***Rv*** at VBR terminals). For example, let the rate increase of ***Nc*** fixed rate terminal nodes at time ***2d*** be ***2d·Rc·Nc*;** the rate increase of ***Nv*** variable rate terminal nodes at time ***2d*** be ***2d·Rv·Nv***; and the decrease in packet transfer rate at the variable rate terminal nodes when there is congestior prediction be ***L***. In this case, if it is ensured that the following relation is satisfied:$\text{L ≥ 2d · Rc · Nc/Nv + 2d · Rv}$ increase in packet transfer rate can be suppressed. In addition, the maximum bit rate after time ***2d*** can be predicted at ***t=-2d*** at intermediate node 20 using *(current bit rate)+(rate increase of CBR or VBR*, *whichever is the larger)* · *2d* · *(Nc+Nv).*

Incidentally, although in the embodiment described above an explanation was given of a packet integrated network congestion avoidance method which provided both Constant Bit Rate service and Variable Bit Rate service, a service in which no packets are discarded is possible using Variable Bit Rate service only. Moreover, unlike the method that has been explained in the foregoing embodiment, wherein congestion is avoided by communicating congestion prediction signals to the terminal nodes, in the embodiment now being considered, because packets containing rate increase request indication are discarded within the network, or the indication that they contain is deleted, congestion avoidance can be achieved without causing any increase in network traffic.

Again, in this embodiment, the fixed rate terminal nodes and variable rate terminal nodes were assumed to be separate nodes, but they may also be a single node the use of which involves switching over. For example, application of this embodiment is possible in a case where nodes are fixed rate terminal nodes up to a given packet transfer rate, while above this rate they become variable rate terminal nodes. That is to say, below a given packet transfer rate, operations on packets containing rate increase request indications are ignored, and packets are transmitted at packet transfer rates that have a rate increase (i.e., acceleration) or a rate increase ratio (i.e., acceleration ratio) that is less than a prescribed value. On the other hand, at higher packet transfer rates, the terminal nodes may be made to operate as variable rate terminal nodes.

In this embodiment, the rate decreasing operation of the variable rate terminal nodes in response to packets containing rate increase request indications was an example where the packet transfer rates of the variable rate terminal nodes did not become equitable. However, the method disclosed in the foregoing embodiment makes it possible to ensure equitable network use of all variable rate terminal nodes. Packet length may be either fixed or variable. To carry out accurate congestion prediction at intermediate node 20, it is preferable to have fixed length packets, but even with variable length packets, congestion prediction is possible if the maximum packet length is used (when packet length distribution is known, this can be packet length at a given estimation error).

### Embodiment of Packet Transfer Rate Prediction

An explanation will next be given of congestion prediction by congestion prediction circuit 25 in intermediate nodes or packet receiving terminal nodes. As was explained in the foregoing embodiments, in this invention, future packet transfer rate is predicted in congestion prediction circuit 25 on the basis of a preestablished upper limit for packet transfer rate acceleration or acceleration ratio, and when it is predicted that this packet transfer rate will exceed a permissible value, a congestion prediction signal is output or a rate increase request indication is deleted.

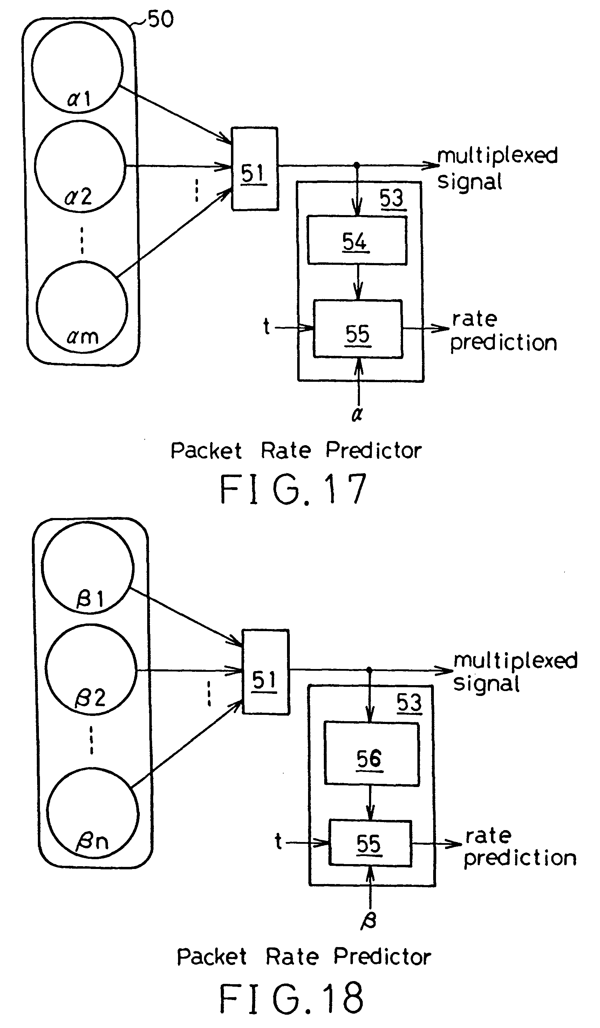

**Figure 17** shows the configuration of an embodiment containing the packet rate predictor of a congestion prediction circuit.

A packet rate predictor 53 according to the present invention has (a) rate measuring device 54 which measures packet transfer rate after packets transmitted from multiple signal source 50 (which corresponds to packet transmitting terminal nodes) have been multiplexed by multiplexing circuit 51, and (b) rate prediction calculating circuit 55 which predicts packet transfer rate after time ***t*** from the upper limit for acceleration α and the current packet transfer rate.

Packet transfer rate prediction by this packet rate predictor 53 will be explained. First of all, the destination address or channel path identifier of each signal source of signal source 50, which is the subject of the measurements, has an upper limit stipulated for the rate of change in packet rate with time (i.e., for acceleration *α*_{*i*}). Signals from the signal sources are multiplexed by multiplexing circuit 51, thereby becoming a multiplexed signal output. This multiplexed signal output is input to rate measuring device 54. In rate measuring device 54, the current packet transfer rate ***V*** can be measured from the total number of bits ***P*** (bit) in all packets per time ***T*** (sec) of the current packet flow, viz:$\text{V = P/T} \text{(} \text{bit} \text{/sec)}$ Alternatively, packet transfer rate may also be measured by measuring packet intervals. The measured packet transfer rate is input to rate prediction calculating circuit 55. The rate of change with time in the rate of each signal source 50 (*α*_{*i*}) and the prediction time *t* are also input to rate prediction calculating circuit 55. On the basis of these three inputs, this rate prediction calculating circuit 55 predicts packet transfer rate after time t and outputs this as a rate prediction.

The prediction calculation performed in this rate prediction calculating circuit 55 will be explained. Because the rise in rate of each signal source 50 after time ***t*** is restricted to less than *α*·***t***, it will not exceed the current packet transfer rate by more than ***α*·*t*.** For this reason, letting the limits for the acceleration of signal sources 50 be ***α***_{***1***}***∼α***_{***m***}**,** the maximum rise is: 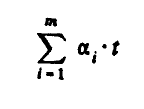 Adding this value to the total current packet transfer rate ***V***_{***Σ***} gives ***V(t)*,** the predicted value for maximum rate after time ***t***: 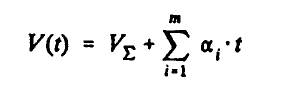 thereby completing the calculation for packet transfer rate prediction. Congestion after time ***t*** can then be predicted by comparing this predicted value for maximum rate after time *t* (***V(t)***) with the maximum permissible rate ***V***_{***max***}**.**

Thus, in the present invention, by restricting the maximum acceleration of each signal source 50, it can be guaranteed that the maximum predicted rate is not exceeded. Because this is not a conventional probabilistic prediction, but can be decided deterministically, congestion can be avoided with certainty.

It may be noted that although there are few problems with maximum rate prediction by means of this method when the number ***m*** of signal sources 50 is small, if the number ***m*** increases, the average rate increase is large even though acceleration is small. As a result, if the delay involved in congestion control - in particular, the time taken for control signals to reach the signal source, and the delay time d in the foregoing embodiments - becomes large, then the time required for rate prediction will increase and there will be a danger that even if the current rate ***V***_{***now***} is 0, it will have reached its maximum, which is equal to the node processing speed or the transmission line rate, by prediction time ***t***. This danger is attributable to the fact that rate prediction by this method is dependent on the number of signal sources.

Next, an explanation will be given with reference to **Figure 18** of a rate prediction method that is not dependent on the number of signal sources. **Figure 18** shows the configuration of packet transfer rate prediction using the ratio of change with time in rate (i.e., the acceleration ratio *e*^{*β*}).

A multiplexed signal output wherein signals from a plurality of signal sources 50 have been multiplexed, is input to rate predictor 53. Rate predictor 53 has group-specific rate measuring device 56 and rate prediction calculating circuit 55. Rate prediction calculating circuit 55 predicts rate after time ***t*** from (a) the current rates for each group as measured by group-specific rate measuring device 56, (b) the ratio of change with time in rate that is input (i.e., the acceleration ratio *e*^{β}), and (c) the prediction time ***t*** that is input.

Group-specific rate measuring device 56 divides input into ***n*** groups, discriminating by means of destination address or path identifier or channel, and measures the current packet transfer rates *V*_{*G1*} ∼ *V*_{*Gn*} for packet flow groups *C*_{*1*} *∼ G*_{*n*}*.* These current packet transfer rates for the various groups are then output to rate prediction calculating circuit 55. The measurement of each of these packet transfer rates is the same as the rate measurement described in connection with **Figure 17.**

Rate prediction calculating circuit 55 performs calculation for predicting rate after time ***t*** from the ratio of change with time in rate for each signal source 50 (acceleration ratio *e*^{β}) and the prediction time ***t***. If the lower limit for the rate of each signal source is not 0 and the ratio of rise in rate after time ***t*** is restricted to less than *exp(β)* per unit time, then, because it must not exceed the current rate by more than a factor of *exp(βt)*, the upper limit for maximum rise in rate is determined. The predicted value for maximum packet rate ***V(t)*** of packet flow after time ***t*** can therefore be obtained for each packet flow group ***G***_{***1***}***∼G***_{***n***} (signal source 50 being divided into ***n*** groups) from (a) the maximum acceleration ratio coefficients β_{*i*} *(i=1 ∼ n)* in these groups, and (b) the current packet transfer rates *V*_{*G1*} *∼ V*_{*Gn*} of the groups, by means of the following equation:

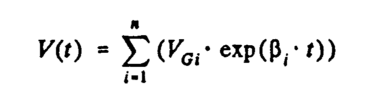

In order to reduce the prediction error involved in this, when grouping the packet flow into ***n*** groups it is desirable to divide into levels according to the size of the acceleration ratio *exp(β)*. This is because it is then possible to guarantee that the rate rise ratio in a group is not exceeded, by standardizing as the largest acceleration ratio coefficient β in the group.

Unlike the method shown in **Figure 17,** this packet transfer rate prediction method shown in **Figure 18** is suitable for prediction in the case of multiplexed signals from a large number of signal sources, due to the number of signal sources not appearing in the prediction equation. In addition, by setting certain β_{*i*} as β_{*i*}=*0*, rate prediction is possible even when constant bit rate signals are present, so this method is also applicable to rate prediction in packet integrated networks where both variable bit rate signal sources and constant bit rate signal sources are present.

This packet transfer rate prediction according to **Figure 18** is valid when each signal source 50 generates signals without interruption (i.e., when the lower limit of the signal sources is not 0). However, if signal sources ***j* (*j=1 ∼s***, where s is the total number of these signal sources) which are able to halt their generation of signals (i.e., their lower limit is 0) start to generate signals at time ***T***_{***0***} which is within the prediction time *t*, then writing ***VI***_{***j***} for each initial rate, the resulting rate increase has an upper limit rate given by:${\text{VI}}_{\text{j}} \text{·} {\text{exp(β}}_{\text{j}} \text{(} \text{t} \text{-} {\text{T}}_{\text{0}} \text{))}$ If it is assumed that this point in time at which signal generation begins is random for all the signal sources, prediction will be impossible, and therefore when initial rate *VI*ⱼ is very small, it can be left out from the rate prediction calculation. However, when it cannot be ignored, the result of adding the total of all the initial rates to the rate prediction calculation will give the upper limit ***V(t)*** of the maximum rate prediction, as given by the following equation:

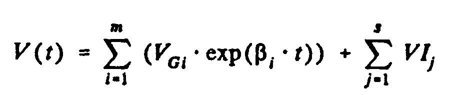

Thus, because the prediction of packet transfer rate in the embodiments of this invention can predict maximum packet transfer rate after time ***t***, it can accurately predict future congestion before it occurs and can therefore be used to avoid congestion prior to its occurrence.

### Embodiment of Packet Transfer Control

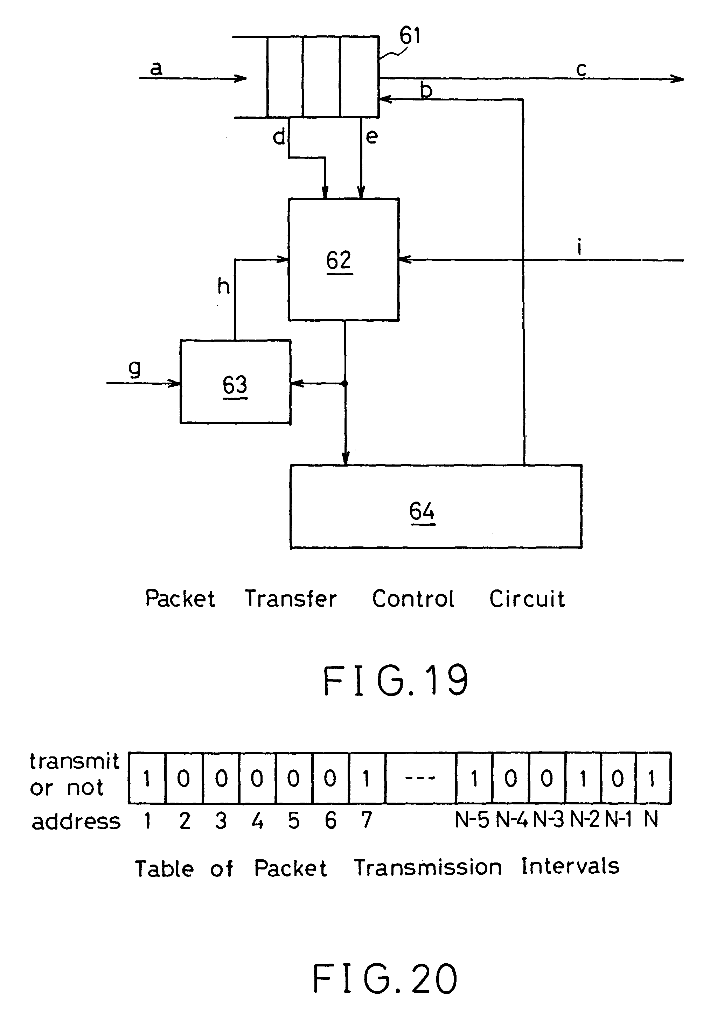

Next, an explanation will be given of the packet transfer control performed by packet transmitting terminal nodes 3. **Figure 19** is a block diagram showing the configuration of the packet transfer control circuit of a packet terminal node, and this corresponds to packet flow control circuit 35 of the packet transmitting terminal node depicted in **Figure 5** or **Figure 12.** Note that the packets in this embodiment are called *cells,* which are fixed length packets.

In **Figure 19,** cell buffer 61 temporarily stores an input cell *a* and forwards a stored cell as output cell ***c*** in response to TRANSMIT CELL indicated by cell transmit/do not transmit signal ***b**.* Cell buffer 61 outputs cell storage signal ***d*** when the stored cells have reached a prescribed number, and outputs an EMPTY signal ***e*** when there are no longer any cells to be forwarded.

Address generating circuit 62 is a circuit which increases the output address value by 1 every cell cycle. When cell storage signal ***d*** is given, address generating circuit 62 gives a read address ***f*** to cell transmission interval table 64, said read address ***f*** having been increasing consecutively from an initial value of 1.

In cell transmission interval table 64 there is written, corresponding to each address, bit information showing whether or not a cell is to be transmitted, and this bit information corresponding to read address ***f*** is output as cell transmit/do not transmit signal ***b**.* The interval between bits indicating that a cell is to be transmitted corresponds to the cell transmission interval, and the bit information showing whether or not a cell is to be transmitted is arranged so that this gets shorter exponentially. An example of such a table is shown in **Figure 20. *1 ∼ N*** are addresses corresponding to elapsed time after each successive cell period. At each address there is written either bit information "1" which indicates that a cell is to be transmitted at that elapsed time, or bit information "0" indicating that a cell is not to be transmitted at that elapsed time. Cell transmit/do not transmit signal b therefore has either a "1" or "0" value, and specifies whether or not a cell is to be transmitted at the elapsed time corresponding to the address in question. As is shown in **Figure 20,** the intervals between successive "1"s (corresponding to the cell transmission interval) continue getting shorter exponentially, and a method for calculating these intervals will be described later.

Cell rate deciding device 63, utilizing the fact that there is a correspondence between read address ***f*** and the cell transmission interval (i.e., the cell rate), decides whether or not the cell rate has exceeded a stipulated value by comparing read address ***f*** with a stipulated address ***g***. If it is decided that the cell rate has exceeded the stipulated value, a decision signal ***h*** is given to address generating circuit 62. Address generating circuit 62 also receives congestion prediction signals ***i***, to the effect that congestion is predicted, from the network.

An explanation will now be given of the working of cell transmission control on the basis of the foregoing configuration.

When cells are stored in cell buffer 61 and a cell storage signal ***d*** is given to address generating circuit 62, address generating circuit 62 outputs a read address ***f*** which it has been incrementing, and cell transmission interval table 64 successively gives, to cell buffer 61, cell transmit/do not transmit signals ***b*** that correspond to this read address ***f***. By this means, output cells ***c*** are forwarded from cell buffer 61 at the interval corresponding to the bit information indicating that a cell is to be transmitted, said bit information having been stored in cell transmission interval table 64.

Furthermore, if the cell rate corresponding to the cell transmission interval exceeds a stipulated peak rate, cell rate deciding device 63 sends decision signal ***h*** to address generating circuit 62. Every time this decision signal ***h*** is input, address generating circuit 62 returns the read address ***f*** to an address value corresponding to the stipulated cell rate, and repeats anew the processing whereby the address value is incremented by 1. This enables a constant cell rate (CBR: constant bit rate) to be maintained. Now suppose that in the cell transmission interval table 64 shown in **Figure 20,** address ***N*** has been made the address corresponding to the peak rate, and that the return address in this case is ***N-5.*** Because the bit information at address ***N-5*** is a "1", the peak rate will increase. In this case, therefore, when the read address ***f*** was returned, it would have been better to have used an address where there was less difference between the average cell rate and the peak rate: for example, to have made ***N-4*** the return address.

Furthermore, if a congestion prediction signal ***i*** is input to address generating circuit 62 from the network, the read address ***f*** is returned from the address value it has at that point in time to an address value that has been decreased by a prescribed number or a prescribed ratio, and starts incrementing the address value by 1 all over again. This enables cell rate to be rapidly decreased and congestion prevented. Note that when a congestion prediction signal ***i*** has been input and the read address ***f*** is returned to an address value that has been decreased by a prescribed ratio, equitable use of all packet terminal nodes using the network can be guaranteed by means of the method disclosed in an aforementioned embodiment, wherein cell rate is decreased by a constant exponential ratio. Moreover, when the read address ***f*** is returned to an address value that has been decreased by a prescribed number, priority can be given to packet terminal nodes that have been forwarding cells from the outset, by using the method disclosed in an aforementioned embodiment, wherein cell rate is decreased by a fixed ratio.

To respond cell transmit/do not transmit signal b which is to TRANSMIT CELL is given on cell buffer 61, when no cell is in the buffer, time duration from transmitting the previous cell to storing a new cell into the cell buffer is measured, and the address value of address generating circuit 62 is set at the value corresponding to measured time duration. If measured time duration is very large, the address value of address generating circuit 62 is returned to its original value.

Next, an explanation will be given of how cell transmission interval table 64 is constructed.

Suppose, for example, that elapsed time ***t*** (sec) from the start of cell transmission in transmission lines where the transmission rate is ***V*** (bit/sec) has an associated constant (i.e., acceleration) ***A*** and an acceleration ratio coefficient β (1/sec). In this case, cell rate will increase in accordance with the exponential function ***A·exp(β·t)*** (bit/sec). Writing the current cell transmission interval as ***P***_{***i***} (an integer), the elapsed time at the start of cell transmission at this interval as *t*_{*i*}, the cell transmission interval error as ***E***_{***i***} **(|*E***_{***i***}**| < *1)*,** and the duration of a single cell as ***T***_{***0***}***,*** the next cell transmission interval ***P***_{***i+1***} (an integer) can be obtained by rounding down, rounding up or rounding off after the decimal point of:$\text{V/} \text{(} \text{A·} \text{exp(} \text{β ·} \text{(} {\text{t}}_{\text{i}} {\text{+ P}}_{\text{i}} {\text{· T}}_{\text{0}} \text{)))} {\text{+ E}}_{\text{i}}$ In addition, the packet transmission interval error *E*_{*i+l*} at this time is given by:$\text{V} \text{/(} \text{A} \text{· exp(β · (} {\text{t}}_{\text{i}} \text{+} {\text{P}}_{\text{i}} \text{·} {\text{T}}_{\text{0}} \text{))) +} {\text{E}}_{\text{i}} \text{-} {\text{P}}_{\text{i}} {\text{}}_{\text{+1}}$

Cell transmission interval table 64 can be constructed by obtaining successive cell transmission intervals in this way. As regards the calculation of cell transmission intervals, it may be noted that a smooth exponential rise in average cell rate with time can be obtained, for high cell rates in particular, by error correction achieved by adding on the previous cell transmission interval error.

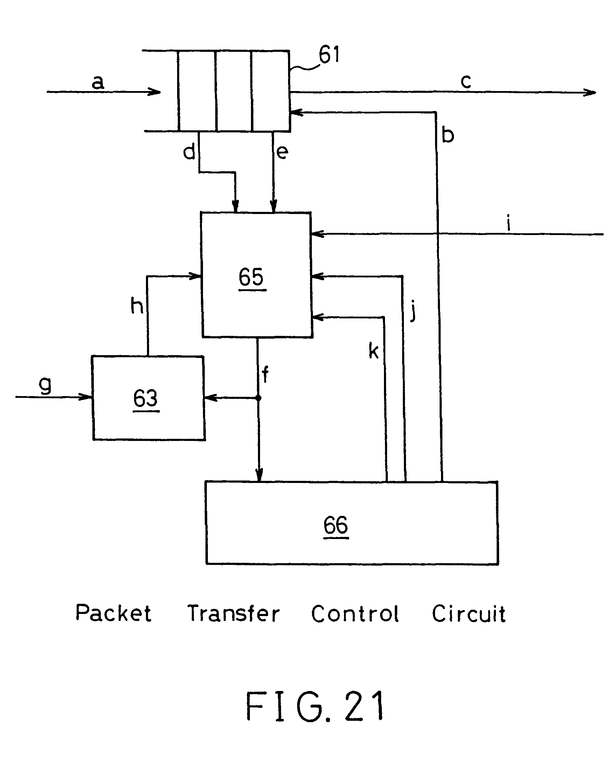

**Figure 21** shows the configuration of another embodiment of the cell transmission control circuit. The configuration depicted in this figure is the same as that of the embodiment shown in **Figure 19**, apart from address generating circuit 65 and cell transmission interval table 66. When read address *f* has been given from address generating circuit 65, cell transmission interval table 66 sends cell transmit/do not transmit signal ***b*** corresponding to this read address ***f***, to cell buffer 61. At the same time, it sends return addresses ***j*** and ***k*** to address generating circuit 65. Return address *j* is a return address that corresponds to a stipulated cell rate, and return address ***k*** is a multiplication or subtraction type return address.

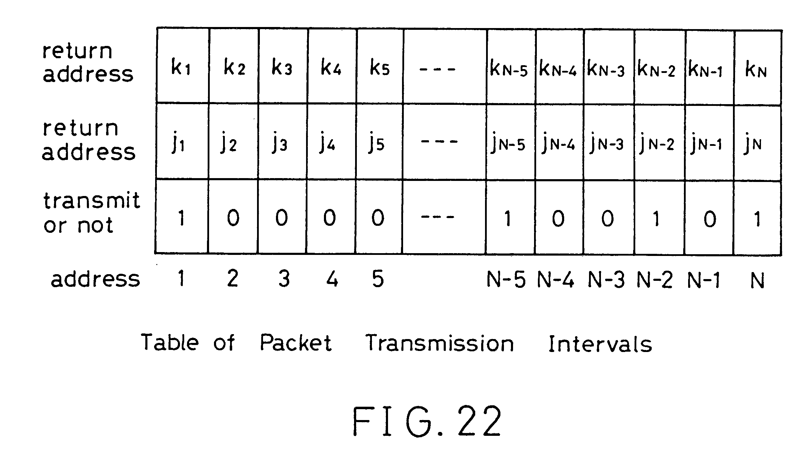

An example of the constitution of cell transmission interval table 66 is given in **Figure *22. 1 ∼ N*** are addresses corresponding to elapsed time after each successive cell period. At each address there is written either bit information "1" which indicates that a cell is to be transmitted at that elapsed time, or bit information "0" indicating that a cell is not to be transmitted at that elapsed time. Also written in cell transmission interval table 66, and corresponding to each address, are multiplication or subtraction type return addresses ***k***_{***1***} ***∼ k***_{***N***} and return addresses ***j***_{***1***} ***∼ j***_{***N***} corresponding to a stipulated cell rate. The method whereby this cell transmission interval table 66 is constructed is the same as in the case of cell transmission interval table 64 described above. However, multiplication type return addresses *k*_{*1*} *∼ k*_{*N*} are obtained by rounding down, rounding up or rounding off after the decimal point, the value obtained by multiplying the address value by a prescribed value ***K (K < 1)***.

As described above, when making equitable use of the network, address generating circuit 65 stores a return address ***k*** (a multiplication type return address) the value of which is lower than that of the address at the current point in time by a prescribed ratio. If a congestion prediction signal ***i*** is input at this point in time, read address ***f*** is returned to this return address ***k*** and address incrementing is resumed. On the other hand, when priority use is to be made of the network, address generating circuit 65 stores a return address ***k*** (a subtraction type return address) the value of which is lower than that of the address at the current point in time by a prescribed number. If a congestion prediction signal ***i*** is input at this point in time, read address ***f*** is returned to this read address ***k*** and address incrementing is resumed.

Address generating circuit 65 also stores return address ***j*** corresponding to a stipulated cell rate, and when the cell rate exceeds the stipulated value, read address ***f*** is returned to this read address ***j*** in response to decision signal ***h*** that is output from cell rate deciding device 63, whereupon address incrementing is resumed. It may be noted that this return address ***j*** is likewise set to an address value where the difference between the average cell rate and the peak rate is small.

Thus, by having all the return addresses written into cell transmission interval table 66, address generating circuit 65 can use the given return addresses just as they are, without any computation being required. Consequently, although the memory capacity of cell transmission interval table 66 increases, it is no longer necessary to have multipliers and subtracters in address generating circuit 65, which facilitates high speed operation.

It may be noted that with the configuration shown in the embodiment disclosed above, when a congestion prediction signal ***i*** is input, read address ***f*** is returned directly to an address that has been decreased either by a prescribed number or a prescribed ratio. However, cell rate may also be decreased by reducing read address ***f*** at this point in time by 1 at each cell period, and decrementing it to an address that has been decreased by a prescribed number or a prescribed ratio. In this case, address incrementing is resumed after it has been decreased to the target address.

Moreover, if the configuration adopted in the embodiment disclosed above is the one wherein read address ***f*** is returned to an address that has been decreased by a prescribed ratio when congestion prediction signal ***i*** has been input, then, because the return address can take all sorts of values according to the cell transmission interval - in other words, because the return time position becomes random ― the probability of cells transmitted from a plurality of packet terminal nodes arriving simultaneously at a congested intermediate node can be reduced.

Also, although in the embodiments shown in **Figures 19** and **20** the increase in rate is an acceleration ratio *exp*(β), a cell transmission control circuit can be similarly constituted using a cell transmission interval table based on acceleration α.

### Effects of the Invention

In a packet network according to this invention, in order to detect the fact that congestion will occur in the future, the packet transfer rate at a prescribed time in the future is predicted deterministically and accurately on the basis of the current packet transfer rate, using the concepts of ***acceleration*** or ***acceleration ratio*** as values indicating the increase in packet transfer rate. As a result, congestion within the network can be predicted, and effective packet transmission control can be carried out on the basis of this prediction. For this reason, this invention is effective in that:
1) there is no packet discard in the packet network;
2) high throughput network operation is possible;
3) buffer memory capacity of nodes can be decreased;
4) there are no restrictions on network topology;
5) an integrated network with both variable bit rate and constant bit rate transmission is possible;
6) above the rate stipulated for CBR transmitting nodes, a node can operate as a VBR transmitting node;
7) it is applicable to 1:1 and N:M transmission;
8) To notify a congestion, the generation of new packets within the network can be avoided.

## Claims

1. A packet network comprising source nodes (3,30,40), and network nodes (2,20) wherein packets are transferred to each network node (2,20) from a number of respective source nodes (3,30,40) via a respective transmission line (11), the transfer being carried out at a transfer rate in accordance with an established upper limit, wherein each network node is adapted to predict a packet transfer rate on the basis of the total packet rate on the transmission line, and a round trip delay time t between the network node and a respective source node, and wherein
if congestion is predicted by a network node, the network node is adapted to send a congestion prediction signal to each respective source node, and wherein
each source node is adapted to decrease its current packet transfer rate when the congestion prediction signal is received **characterised in that** the degrees of increase of the transfer rate have an upper limit set by an acceleration (α) or an acceleration ratio (exp(β)) which respectively indicate the rate of change with time or the ratio of change with time of the packet transfer rate, and in that each network node is adapted to predict a packet transfer rate on the basis of the acceleration (α) or the acceleration ratio (exp β)) .

2. A packet network according to claim 1, wherein the transfer rate has an upper limit set by an acceleration (α), the network has a means (54,55) whereby the maximum packet transfer rate V(t) after time t is obtained by calculation using: 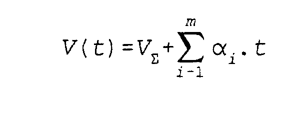 where αᵢ (i=1_{~}m) is the stipulated upper limit for packet acceleration and V_{Σ} is the total current packet rate, where m is the number of respective source nodes.

3. A packet network according to claim 1 or claim 2, wherein the transfer rate has an upper limit set by an acceleration (α), each network node further being adapted to predict a packet transfer rate on the basis of the number of respective source nodes using the respective transmission line.

4. A packet network according to claim 1, wherein the transfer rate has an upper limit set by an acceleration ratio (exp(β)), there is a lower limit for packet rate, the transmission lines are divided into n groups, and wherein the network has a means (56,55) whereby the maximum packet transfer rate V(t) after time t is obtained by calculation using: 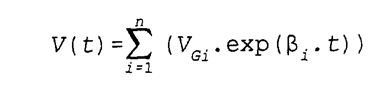 where exp(βᵢ) (i=1_{~}n) is the maximum acceleration ratio within each group, and V_{G1 ~} V_{Gn} are the current packet transfer rates of the various groups.

5. A packet network according to claim 1, wherein the transfer rate has an upper limit set by an acceleration ratio (exp(β)), the transmission lines (11) are divided into n groups, and wherein the network has a means (56,55) whereby the maximum packet transfer rate V(t) after time t is obtained by calculation using: 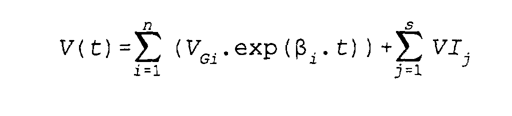 where VIⱼ (j=1_{~}s) is the initial packet transfer rate (s is the total number of source nodes), exp(βᵢ) (i=1_{~}n) is the maximum acceleration ratio within each group, V_{G1~}V_{Gn} are the current packet transfer rates of the various groups, and: 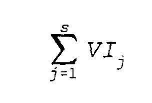 is the total of all initial packet transfer rates.

6. A packet network according to any of the preceding claims, each source node (40) having a means (45) for transmitting packets at transfer rates which are within the aforementioned upper limit for packet transfer rates, and which correspond to a value that indicates the degree of increase in packet transfer rate up to a prescribed value; and means for disregarding a congestion prediction signal.

7. A packet network according to any of claims 1 to 6, each source node having a means (38,35) whereby the packet transfer rate is decreased when new packets or user packets sent from a network node (2,20) to the source node (3,30) when a rise in receiving rate has been accepted do not arrive within a predetermined time at the source node (3,30), said packets indicating a packet transfer rate increase request to this effect.

8. A packet network according to any of the preceding claims, each source node having a means (38,35) whereby, when a congestion prediction signal is received, packets are transmitted at a transfer rate obtained by decreasing the packet transfer rate at that point in time by a fixed rate, or by a fixed ratio, or by a constant exponential ratio.

9. A packet network according to any of the preceding claims, wherein each network node is either a destination node or an intermediate node, and wherein source nodes transfer packets to destination nodes, via intermediate nodes.

10. A method of congestion avoidance in packet networks in which packets are transferred to a network node (2,20) from a number of respective source nodes (3,30,40) via a respective transmission line (11), the transfer being carried out at a transfer rate in accordance with an established upper time limit, the method comprising causing each network node (2,20) to predict the packet transfer rate on the basis of the total packet rate on the transmission line and a round trip delay time t between the network node and the furthest source node, and wherein, when congestion is predicted, notifying the aforementioned source nodes (3,30,40) that congestion is anticipated; and causing each respective source node to decrease its current packet transfer rate when this notification to the effect that congestion is expected is received, **characterised in that** the degrees of increase of the transfer rate have an upper limit set by an acceleration (α) or an acceleration ratio (exp(β)) which respectively indicate the rate of change with time or the ratio of change with time of the packet transfer rate; and in that the method further comprises causing each network node (2,20) to predict the packet transfer rate on the basis of the acceleration (α) or the acceleration ratio (exp(β)).

11. A congestion avoidance method for an integrated network wherein: packets are transferred to a network node (2,20) from a number of respective source nodes (3,30,40) via a respective transmission line (11); an upper limit is established for the packet transfer rate of all source nodes; source nodes include source nodes (30) which can decrease the packet transfer rate and source nodes (40) which do not decrease the packet transfer rate, upon receiving notification that congestion is anticipated; and also source nodes (30,40) which can decrease the packet transfer rate during transmission at above a stipulated rate, but which do not decrease the packet transfer rate during transmission at below the stipulated rate; wherein source nodes which can decrease their packet transfer rate send packets at transfer rates of which degrees of increase have an upper limit set by an acceleration (α) or an acceleration ratio (exp(β)), wherein the method further comprises causing each network node to predict the packet transfer rate on the basis of the total packet rate on the transmission line and the acceleration (α) or the acceleration ratio (exp(β)), and a round-trip delay time t between the network node and a respective source node and wherein if congestion is predicted by a network node, causing the network node to send a congestion prediction signal to the respective source nodes; and causing each source node to decrease their packet transfer rate, when the congestion prediction signal is received, taking into account the predicted rise in rate associated with the inclusion of source nodes (40) that do not decrease rate.

12. A method according to claim 10 or claim 11, wherein the transfer rate has an upper limit set by an acceleration (α), further comprising causing each network node (2,20) to predict the packet transfer rate on the basis of the number of source nodes on the transmission line.

13. A congestion avoidance method for packet networks according to any of claims 10 to 12, wherein the packet transfer rate has an upper limit set by an acceleration (α), and wherein the packet transfer rate is decreased by a fixed ratio when notification is received that congestion is predicted.

14. A congestion avoidance for packet networks according to any of claims 10 to 12, wherein the packet transfer rate has an upper limit set by an acceleration ratio (exp(β)), and wherein the packet transfer is decreased by a constant exponential ratio when notification is received that congestion will occur.

15. A congestion avoidance method for packet networks according to any of claims 10 to 14, and wherein notification that congestion will occur is carried out by deleting a packet transfer rate increase request signal or a packet transfer rate increase request indication.

16. A method according to any of claims 10 to 15, wherein the network nodes comprise destination nodes and/or intermediate nodes, wherein source nodes transfer data to destination nodes via intermediate nodes.

## Patentansprüche

1. Paketnetzwerk mit Quellenknoten (3, 30, 40) und Netzwerkknoten (2, 20), wobei zu jedem Netzwerkknoten (2, 20) von einer Anzahl entsprechender Quellenknoten (3, 30, 40) Pakete über eine entsprechende Übertragungsleitung (11) übertragen werden und die Übertragung mit einer Übertragungsgeschwindigkeit in Übereinstimmung mit einer vorgegebenen oberen Grenze erfolgt und jeder Netzwerkknoten so ausgebildet ist, daß er eine Paketübertragungsgeschwindigkeit auf der Basis der Gesamtübertragungsgeschwindigkeit auf der Übertragungsleitung und einer Umlaufverzögerungszeit t zwischen dem Netzwerkknoten und einem entsprechenden Quellenknoten vorhersagen kann, und wobei,
wenn eine Überlastung durch einen Netzwerkknoten vorhergesagt wird, der Netzwerkknoten ein Überlastungsvorhersagesignal an jeden entsprechenden Quellenknoten senden kann, und wobei
jeder Quellenknoten so ausgebildet ist, daß er seine augenblickliche Paketübertragungsgeschwindigkeit verringern kann, wenn er das Überlastungsvorhersagesignal empfängt, **dadurch gekennzeichnet**, daß die Maße einer Erhöhung der Übertragungsgeschwindigkeit eine obere Grenze haben, die durch eine Beschleunigung (α) oder ein Beschleunigungsverhältnis (exp(β)) gesetzt wird, die jeweils die zeitliche Änderungsgeschwindigkeit oder das zeitliche Änderungsverhältnis der Paketübertragungsgeschwindigkeit anzeigen, und daß jeder Netzwerkknoten so ausgebildet ist, daß er eine Paketübertragungsgeschwindigkeit auf der Basis der Beschleunigung (α) oder des Beschleunigungsverhältnisses (exp(β)) vorhersagen kann.

2. Paketnetzwerk nach Anspruch 1, bei dem die Übertragungsgeschwindigkeit eine obere Grenze hat, die durch eine Beschleunigung (α) gesetzt wird, das Netzwerk ein Mittel (54, 55) aufweist, durch das die maximale Paketübertragungsgeschwindigkeit V(t) nach der Zeit t durch eine Rechnung nach der Gleichung 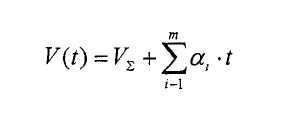 ermittelt wird, wobei αᵢ (i=1...m) die vorgeschriebene obere Grenze der Paketbeschleunigung und V_{Σ} die augenblickliche Gesamtpaketgeschwindigkeit und m die Anzahl der jeweiligen Quellenknoten ist.

3. Paketnetzwerk nach Anspruch 1 oder Anspruch 2, bei dem die Übertragungsgeschwindigkeit eine durch eine Beschleunigung (α) gesetzte obere Grenze hat und jeder Netzwerkknoten ferner so ausgebildet ist, daß er eine Paketübertragungsgeschwindigkeit auf der Basis der Anzahl der jeweiligen Quellenknoten, die die jeweilige Übertragungsleitung benutzen, vorhersagen kann.

4. Paketnetzwerk nach Anspruch 1, bei dem die Übertragungsgeschwindigkeit eine durch ein Beschleunigungsverhältnis (exp(β)) gesetzte obere Grenze hat, eine untere Grenze für die Paketgeschwindigkeit vorhanden ist, die Übertragungsleitungen in n Gruppen eingeteilt sind und das Netzwerk ein Mittel (56, 55) aufweist, durch das die maximale Paketübertragungsgeschwindigkeit V(t) nach der Zeit t anhand der Gleichung 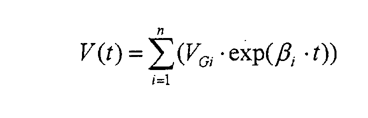 berechnet wird, wobei exp (βᵢ) (i=1...n) das maximale Beschleunigungsverhältnis innerhalb jeder Gruppe ist und V_{G1} ... V_{Gn} die augenblicklichen Paketübertragungsgeschwindigkeiten der verschiedenen Gruppen sind.

5. Paketnetzwerk nach Anspruch 1, bei dem die Übertragungsgeschwindigkeit eine durch ein Beschleunigungsverhältnis (exp(β)) gesetzte Grenze hat, die Übertragungsleitungen (11) in n Gruppen eingeteilt sind und das Netzwerk ein Mittel (56, 55) aufweist, durch das die maximale Paketübertragungsgeschwindigkeit V(t) nach der Zeit t anhand der Gleichung 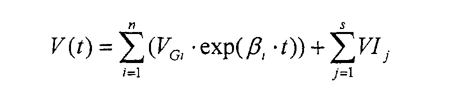 berechnet wird, wobei VIⱼ (j=1...s) die anfängliche Paketübertragungsgeschwindigkeit ist, s die Gesamtanzahl der Quellenknoten ist, exp(βᵢ) (i=1...n) das maximale Beschleunigungsverhältnis innerhalb jeder Gruppe ist, V_{G1}...V_{Gn} die augenblicklichen Paketübertragungsgeschwindigkeiten der verschiedenen Gruppen sind und 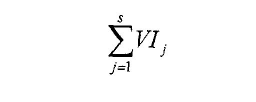 die Summe aller anfänglichen Paketübertragungsgeschwindigkeiten ist.

6. Paketnetzwerk nach einem der vorstehenden Ansprüche, bei dem jeder Quellenknoten (40) ein Mittel (45) zur Übertragung von Paketen mit Übertragungsgeschwindigkeiten, die innerhalb der zuvor erwähnten oberen Grenze für Paketübertragungsgeschwindigkeiten liegen und die einem Wert entsprechen, der das Maß der Erhöhung der Paketübertragungsgeschwindigkeiten bis zu einem vorbestimmten Wert anzeigt, und Mittel zum Ignorieren eines Überlastungsvorhersagesignals aufweist.

7. Paketnetzwerk nach einem der Ansprüche 1 bis 6, bei dem jeder Quellenknoten ein Mittel (38, 35) aufweist, durch das die Paketübertragungsgeschwindigkeit verringert wird, wenn neue Pakete oder Benutzerpakete, die von einem Netzwerkknoten (2, 20) zu dem Quellenknoten (3, 30) gesendet werden und ein Anstieg der Empfangsgeschwindigkeit akzeptiert worden ist, nicht innerhalb einer vorbestimmten Zeit im Quellenknoten (3, 30) eintreffen, wobei die erwähnten Pakete eine Paketübertragungsgeschwindigkeitserhöhungsanforderung zu diesem Zweck anzeigen.

8. Paketnetzwerk nach einem der vorstehenden Ansprüche, bei dem jeder Quellenknoten ein Mittel (38, 35) aufweist, durch das, wenn eine Überlastungsvorhersagesignal empfangen wird, die Pakete mit einer Übertragungsgeschwindigkeit übertragen werden, die sich durch eine in diesem Augenblick bewirkte Verringerung der Paketübertragungsgeschwindigkeit um eine feste Geschwindigkeit oder um ein festes Verhältnis oder um ein konstantes Exponentialverhältnis ergibt.

9. Paketnetzwerk nach einem der vorstehenden Ansprüche, bei dem jeder Netzwerkknoten entweder ein Zielknoten oder ein Zwischenknoten ist und bei dem Quellenknoten Pakete über Zwischenknoten zu Zielknoten übertragen.

10. Verfahren zur Überlastungsvermeidung in Paketnetzwerken, bei denen Pakete von einer Anzahl entsprechender Quellenknoten (3, 30, 40) über eine entsprechende Übertragungsleitung (11) zu einem Netzwerkknoten (2, 20) übertragen werden, die Übertragung mit einer Übertragungsgeschwindigkeit entsprechend einer vorbestimmten oberen Zeitgrenze ausgeführt wird und das Verfahren aufweist: das Veranlassen jedes Netzwerkknotens (2, 20), die Paketübertragungsgeschwindigkeit auf der Basis der Gesamtpaketgeschwindigkeit auf der Übertragungsleitung und einer Umlaufverzögerungszeit t zwischen dem Netzwerkknoten und dem entferntesten Quellenknoten vorherzusagen, und wenn eine Überlastung vorhergesagt wird, den erwähnten Quellenknoten (3, 30, 40) mitzuteilen, daß eine Überlastung antizipiert wird, und das Veranlassen jedes entsprechenden Quellenknotens, seine augenblickliche Paketübertragungsgeschwindigkeit zu verringern, wenn die Mitteilung, daß eine Überlastung zu erwarten ist, empfangen wird, **dadurch gekennzeichnet**, daß die Maße der Erhöhung der Übertragungsgeschwindigkeit eine obere Grenze aufweisen, die durch eine Beschleunigung (α) oder ein Beschleunigungsverhältnis (exp(β)) gesetzt wird, die jeweils die zeitliche Änderungsgeschwindigkeit oder das zeitliche Änderungsverhältnis der Paketübertragungsgeschwindigkeit anzeigen, und daß das Verfahren ferner beinhaltet, daß jedes Netzwerk (2, 20) veranlaßt wird, die Paketübertragungsgeschwindigkeit auf der Basis der Beschleunigung (α) oder des Beschleunigungsverhältnisses (exp(β)) vorherzusagen.

11. Überlastungsvermeidungsverfahren für ein integriertes Netzwerk, bei dem Pakete von einer Anzahl entsprechender Quellenknoten (3, 30, 40) über eine entsprechende Übertragungsleitung (11) zu einem Netzwerkknoten (2, 20) übertragen werden; eine obere Grenze für die Paketübertragungsgeschwindigkeit aller Quellenknoten vorgegeben wird; Quellenknoten solche Quellenknoten (30), die die Paketübertragungsgeschwindigkeit verringern können, und solche Quellenknoten (40), die die Paketübertragungsgeschwindigkeit nicht verringern, wenn sie die Mitteilung empfangen, daß eine Überlastung antizipiert wird, und auch solche Quellenknoten (30, 40) aufweisen, die die Paketübertragungsgeschwindigkeit während einer Übertragung mit einer oberhalb einer vorgeschriebenen Geschwindigkeit liegenden Geschwindigkeit verringern können, die Paketübertragungsgeschwindigkeit während einer Übertragung mit einer unterhalb der vorgeschriebenen Geschwindigkeit liegenden Geschwindigkeit jedoch nicht verringern; bei dem Quellenknoten, die ihre Paketübertragungsgeschwindigkeit verringern können, Pakete mit Übertragungsgeschwindigkeiten senden, deren Erhöhungsmaße eine obere Grenze haben, die durch eine Beschleunigung (α) oder ein Beschleunigungsverhältnis (exp(β)) gesetzt wird, wobei das Verfahren ferner aufweist: das Veranlassen jedes Netzwerkknotens, die Paketübertragungsgeschwindigkeit auf der Basis der Gesamtpaketgeschwindigkeit auf der Übertragungsleitung und der Beschleunigung (α) oder des Beschleunigungsverhältnisses (exp(β)) und einer Umlaufverzögerungszeit t zwischen dem Netzwerkknoten und einem entsprechenden Quellenknoten vorherzusagen, das Veranlassen des Netzwerkknotens, eine Überlastungsvorhersagesignal an die entsprechenden Quellenknoten zu senden; und das Veranlassen jedes Quellenknotens, seine Übertragungsgeschwindigkeit zu verringern, wenn das Überlastungsvorhersagesignal empfangen wird, und zwar unter Berücksichtigung der Erhöhung der Geschwindigkeit, die mit dem Einschluß der Quellenknoten (40) verbunden ist, die die Geschwindigkeit nicht verringern.

12. Verfahren nach Anspruch 10 oder Anspruch 11, bei dem die Übertragungsgeschwindigkeit eine obere Grenze hat, die durch eine Beschleunigung (α) gesetzt wird, und das aufweist, das Veranlassen jedes Netzwerkknotens (2, 20) die Paketübertragungsgeschwindigkeit auf der Übertragungsleitung auf der Basis der Anzahl der Quellenknoten vorherzusagen.

13. Überlastungsvermeidungsverfahren für Paketnetzwerke nach einem der Ansprüche 10 bis 12, bei dem die Paketübertragungsgeschwindigkeit eine obere Grenze hat, die durch eine Beschleunigung (α) gesetzt wird, und bei dem die Paketübertragungsgeschwindigkeit um ein festes Verhältnis verringert wird, wenn eine Mitteilung empfangen wird, daß eine Überlastung vorhergesagt wird.

14. Überlastungsvermeidungsverfahren für Paketnetzwerke nach einem der Ansprüche 10 bis 12, bei dem die Paketübertragungsgeschwindigkeit eine obere Grenze hat, die durch ein Beschleunigungsverhältnis (exp(β)) gesetzt wird, und bei dem die Paketübertragungsgeschwindigkeit um ein konstantes Exponentialverhältnis verringert wird, wenn eine Mitteilung empfangen wird, daß eine Überlastung auftreten wird.

15. Überlastungsvermeidungsverfahren für Paketnetzwerke nach einem der Ansprüche 10 bis 14 und bei dem eine Mitteilung, daß eine Überlastung auftreten wird, durch Löschung eines Paketübertragungsgeschwindigkeitserhöhungsanforderungssignals oder einer Paketübertragungsgeschwindigkeitserhöhungsanforderungsanzeige ausgeführt wird.

16. Verfahren nach einem der Ansprüche 10 bis 15, bei dem die Netzwerkknoten Zielknoten und/oder Zwischenknoten aufweisen, wobei Quellenknoten Daten über Zwischenknoten zu Zielknoten übertragen.

## Revendications

1. Réseau de paquets comprenant des noeuds de source (3, 30, 40) et des noeuds de réseau (2, 20), dans lequel des paquets sont transférés vers chaque noeud de réseau (2, 20) à partir de plusieurs noeuds de source respectifs (3, 30, 40) par l'intermédiaire d'une ligne de transmission respective (11), le transfert étant effectué à un débit de transfert en accord avec une limite supérieure établie, dans lequel chaque noeud de réseau est adapté à prédire un débit de transfert de paquets sur la base du débit de paquets total de la ligne de transmission et d'un temps de retard de parcours t entre le noeud de réseau et un noeud de source respectif, et dans lequel :
si une congestion est prédite par un noeud de réseau, le noeud de réseau est adapté à renvoyer un signal de prédiction de congestion à chaque noeud de source respectif, et dans lequel :
chaque noeud de source est adapté à réduire son débit de transfert de paquets courant quand le signal de prédiction de congestion est reçu, **caractérisé en ce que** le taux d'augmentation du débit de transfert a une limite supérieure établie par une accélération (α) ou un taux d'accélération (exp(β)) qui indique respectivement la vitesse de changement en fonction du temps ou le taux de changement en fonction du temps du débit de transfert de paquets, et dans lequel chaque noeud de réseau est adapté à prédire un débit de transfert de paquets sur la base de l'accélération (α) ou du taux d'accélération (exp(β)).

2. Réseau de paquets selon la revendication 1, dans lequel le débit de transfert a une limite supérieure établie par une accélération (α), et le réseau comprend un moyen (54, 55) par lequel le débit de transfert de paquets maximum V(t) après l'instant t est fourni par l'expression suivante : 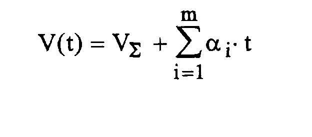 où αᵢ (i=1-m) est la limite supérieure stipulée pour l'accélération de paquets et V_{Σ} est le débit de paquets courant total, où m est le nombre de noeuds de source respectifs.

3. Réseau de paquets selon la revendication 1 ou 2, dans lequel le débit de transfert a une limite supérieure établie par une accélération (α), chaque noeud de réseau étant en outre adapté à prédire un débit de transfert de paquets sur la base du nombre de noeuds de source respectifs en utilisant la ligne de transmission respective.

4. Réseau de paquets selon la revendication 1, dans lequel le débit de transfert a une limite supérieure établie par un taux d'accélération (exp(β)), il existe une limite inférieure pour le débit de paquets, les lignes de transmission sont divisées en n groupes, et dans lequel le réseau comprend un moyen (56, 55) par lequel le débit de transfert maximum de paquets V(t) après l'instant t est obtenu par le calcul en utilisant : 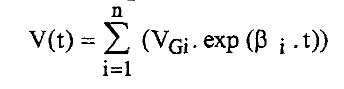 où exp(βᵢ) (i=1-n) est le taux d'accélération maximum dans chaque groupe et V_{G1}-V_{Gn} sont les débits de transfert de paquets courants des divers groupes.

5. Réseau de paquets selon la revendication 1, dans lequel le débit de transfert a une limite supérieure fixée par un taux d'accélération (exp(β)), les lignes de transmission (11) sont divisées en n groupes, et dans lequel le réseau comprend un moyen (56, 55) par lequel le débit de transfert maximum de paquets V(t) après l'instant t est obtenu par le calcul en utilisant : 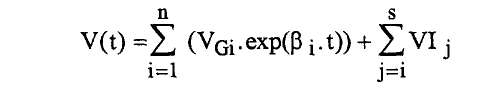 où VIⱼ (j=1-s) est le débit de transfert initial de paquets (s est le nombre total de noeuds de source), exp(βᵢ) (i=1-n) est le taux d'accélération maximum dans chaque groupe, V_{Gl}-V_{Gn} sont les débits de transfert courants de paquets des divers groupes, et : 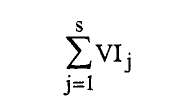 est le total de tous les débits de transfert initiaux de paquets.

6. Réseau de paquets selon l'une quelconque des revendications précédentes, chaque noeud de source (40) comprenant des moyens (45) pour transmettre des paquets à des débits de transfert qui sont à l'intérieur de la limite supérieure susmentionnée pour les débits de transfert de paquets, et qui correspondent à une valeur initiale qui indique le taux d'augmentation de débit de transfert de paquets jusqu'à une valeur prescrite ; et des moyens pour négliger un signal de prédiction de congestion.

7. Réseau de paquets selon l'une quelconque des revendications 1 à 6, dans lequel chaque noeud de source comprend un moyen (38, 35) par lequel le débit de transfert de paquets est réduit quand de nouveaux paquets ou paquets d'utilisateurs envoyés à partir d'un noeud de réseau (2, 20) vers le noeud de source (3, 30) quand une augmentation de débit de réception a été acceptée n'arrivent pas en moins d'une durée déterminée au niveau du noeud de source (3, 30), les paquets indiquant une requête d'augmentation de débit de transfert de paquets à cet effet.

8. Réseau de paquets selon l'une quelconque des revendications précédentes, chaque noeud de source comprenant un moyen (38, 35) par lequel, quand un signal de prédiction de congestion est reçu, des paquets sont transmis à un débit de transfert obtenu en réduisant le débit de transfert de paquets à cet instant d'un taux fixe, ou d'un rapport fixe, ou d'un taux exponentiel constant.

9. Réseau de paquets selon l'une quelconque des revendications précédentes, dans lequel chaque noeud de réseau est un noeud de destination ou un noeud intermédiaire, et dans lequel les noeuds de source transfèrent des paquets vers des noeuds de destination par l'intermédiaire de noeuds intermédiaires.

10. Procédé pour éviter la congestion dans des réseaux de paquets, dans lequel des paquets sont transférés vers un noeud de réseau (2, 20) à partir de plusieurs noeuds de source respectifs (3, 30, 40) par l'intermédiaire d'une ligne de transmission respective (11), le transfert étant effectué à un débit de transfert en accord avec une limite temporelle supérieure établie, le procédé comprenant les étapes consistant à amener chaque noeud de réseau (2, 20) à prédire le débit de transfert de paquets sur la base du débit de paquets total sur la ligne de transmission et du temps de retard de parcours t entre le noeud de réseau et le noeud de source le plus éloigné, et dans lequel, quand une congestion est prédite, on notifie aux noeuds de source susmentionnés (3, 30, 40) qu'une congestion est prévue ; et à amener chaque noeud de source respectif à diminuer son débit de transfert de paquets quand cette notification est reçue pour indiquer qu'une congestion est prévue, **caractérisé en ce que** les taux d'augmentation de débit de transfert ont une limite supérieure fixée par une accélération (α) ou par un taux d'accélération (exp(β)) qui indique respectivement le taux de changement en fonction du temps ou le rapport de changement en fonction du temps du débit de transfert de paquets ; et en ce que le procédé susmentionné comprend l'étape consistant à amener chaque noeud de réseau (2, 20) à prédire le débit de transfert de paquets sur la base de l'accélération (α) ou du taux d'accélération (exp(β)).

11. Procédé pour éviter une congestion d'un réseau intégré dans lequel des paquets sont transférés à un noeud de réseau (2, 20) à partir de plusieurs noeuds de source respectifs (3, 30, 40) par l'intermédiaire d'une ligne de transmission respective (11) ; une limite supérieure est établie pour le débit de transfert de paquets de tous les noeuds de source ; les noeuds de source comprennent des noeuds de source (30) qui peuvent diminuer le débit de transfert de paquets et des noeuds de source (40) qui ne diminuent pas le débit de transfert de paquets, par suite de la réception d'une notification selon laquelle une congestion est prévue ; et également des noeuds (30, 40) qui peuvent réduire le débit de transfert de paquets pendant une transmission au-dessus d'un débit stipulé, mais qui ne réduisent pas le débit de transfert de paquets pendant une transmission en dessous du débit stipulé ; dans lequel les noeuds de source qui peuvent réduire leur débit de transfert de paquets envoient des paquets à des débits de transfert dont les taux d'augmentation ont une limite supérieure établie par une accélération (α) ou un taux d'accélération (exp(β)), dans lequel le procédé comprend en outre l'étape consistant à amener chaque noeud de paquets à prédire le débit de transfert sur la base du débit de paquets total sur la ligne de transmission et l'accélération (α) ou le taux d'accélération (exp(β)), et un temps de retard de parcours t entre le noeud de réseau et un noeud de source respectif, et dans lequel, si une congestion est prédite par le noeud de réseau, on amène le noeud de réseau à envoyer un signal de prédiction de congestion aux noeuds de source respectifs ; et amener chaque noeud de source à réduire son débit de transfert de paquets quand le signal de prédiction de congestion est reçu, en tenant compte de l'augmentation prédite de débit associée en incluant les noeuds de source (40) qui ne réduisent pas le débit.

12. Procédé selon la revendication 10 ou 11, dans lequel le débit de transfert a une limite supérieure fixée par une accélération (α), comprenant en outre l'étape consistant à amener chaque noeud de réseau (2, 20) à prédire le débit de transfert de paquets sur la base du nombre de noeuds de source sur la ligne de transmission.

13. Procédé pour éviter une congestion pour des réseaux de paquets selon l'une quelconque des revendications 10 à 12, dans lequel le débit de transfert de paquets a une limite supérieure établie par une accélération (α), et dans lequel le débit de transfert de paquets est réduit d'un taux fixe quand une notification est reçue selon laquelle une congestion est prédite.

14. Procédé pour éviter une congestion dans des réseaux de paquets selon l'une quelconque des revendications 10 à 12, dans lequel le débit de transfert de paquets a une limite supérieure fixée par un taux d'accélération (exp(β)), et dans lequel le débit de transfert de paquets est réduit d'un rapport exponentiel constant quand une notification est reçue selon laquelle une congestion doit survenir.

15. Procédé pour éviter une congestion dans des réseaux de paquets selon l'une quelconque des revendications 10 à 14, dans lequel une notification selon laquelle une congestion va survenir est fournie en supprimant un signal de requête d'augmentation de débit de transfert de paquets ou une indication de requête d'augmentation de débit de transfert de paquets.

16. Procédé selon l'une quelconque des revendications 10 à 15, dans lequel les noeuds de réseau comprennent des noeuds de destination et/ou des noeuds intermédiaires, et dans lequel les noeuds de source transfèrent des données aux noeuds de destination par l'intermédiaire de noeuds intermédiaires.
